# EUROPEAN PATENT APPLICATION

(11) **EP 4 660 757 A1**
(43) Date of publication of application: **10.12.2025**
(21) Application number: 25180843.2
(22) Date of filing: 04.06.2025
(51) Int. Cl.: G06F 3/01, G06F 3/04815, G06T 19/00, G06F 3/04845

(54) **TECHNIQUES FOR MANAGING THREE-DIMENSIONAL CONTENT**

(30) Priority: 09.06.2024 US 202463657904 P; 10.01.2025 US 202519016219
(71) Applicant: Apple Inc., Cupertino, CA 95014 (US)
(72) Inventor: SAPRE, Meghna Achyut, Cupertino, 95014 (US); TENANT DE LA TOUR, Miguel, Cupertino, 95014 (US); KIM, Nahckjoon, Cupertino, 95014 (US); SAWYER, Andrew J., Cupertino, 95014 (US); HAJAS, Peter L., Cupertino, 95014 (US); KENDALL, Grace E., Cupertino, 95014 (US); HASKINS, Harlan B., Cupertino, 95014 (US); MIRON, Aviv, Cupertino, 95014 (US)
(74) Representative: Bateman, Samuel Alec

(57) **Abstract**

Some techniques are for providing a viewing direction for 3D object based on a user position in accordance with some embodiments. Other techniques are for rendering a 3D object in a respective manner in accordance with some embodiments.

## Description

### CROSS-REFERENCE TO RELATED APPLICATIONS

The present application claims priority to U.S. Provisional Patent Application Serial No. 63/657,904, entitled "TECHNIQUES FOR MANAGING THREE-DIMENSIONAL CONTENT" filed June 9, 2024, which is hereby incorporated by reference in its entirety for all purposes.

### FIELD

The present disclosure relates generally to techniques for displaying and managing three-dimensional (3D) content.

### BACKGROUND

Rendering and displaying 3D content sometimes requires a computer system to provide sensitive user information to third-party applications. Accordingly, there is a need to ensure that such information is protected.

### SUMMARY

Some techniques for rendering and displaying 3D content are generally ineffective and/or inefficient. Accordingly, this disclosure provides more effective, efficient, and/or secure techniques for rendering and displaying 3D content. It should be recognized that other types of content can benefit from techniques described herein. For example, two-dimensional (2D) content, text, and/or other types of content can use techniques described herein. In addition, techniques optionally complement or replace other techniques for managing 3D environments.

In some embodiments, a method that is performed at a computer system that is executing a system process is described. In some embodiments, the method comprises: receiving a first position of a subject; and in response to receiving the first position of the subject: in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.

In some embodiments, a non-transitory computer-readable storage medium storing one or more programs configured to be executed by one or more processors of a computer system that is executing a system process is described. In some embodiments, the one or more programs includes instructions for: receiving a first position of a subject; and in response to receiving the first position of the subject: in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.

In some embodiments, a transitory computer-readable storage medium storing one or more programs configured to be executed by one or more processors of a computer system that is executing a system process is described. In some embodiments, the one or more programs includes instructions for: receiving a first position of a subject; and in response to receiving the first position of the subject: in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.

In some embodiments, a computer system that is executing a system process is described. In some embodiments, the computer system comprises one or more processors and memory storing one or more programs configured to be executed by the one or more processors. In some embodiments, the one or more programs includes instructions for: receiving a first position of a subject; and in response to receiving the first position of the subject: in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.

In some embodiments, a computer system that is executing a system process is described. In some embodiments, the computer system comprises means for performing each of the following steps: receiving a first position of a subject; and in response to receiving the first position of the subject: in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.

In some embodiments, a computer program product is described. In some embodiments, the computer program product comprises one or more programs configured to be executed by one or more processors of a computer system that is executing a system process. In some embodiments, the one or more programs include instructions for: receiving a first position of a subject; and in response to receiving the first position of the subject: in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.

In some embodiments, a method that is performed at a computer system that is in communication with one or more input devices, wherein the computer system is executing a system process is described. In some embodiments, the method comprises: receiving, from an application, an input corresponding to a request to manage an orientation of an object in a respective manner; after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and in response to detecting the input corresponding to the request to place the object at the first location in the environment: in accordance with a determination that the respective manner is a first manner, rendering the object in a first orientation; and in accordance with a determination that the respective manner is a second manner different from the first manner, rendering the object in a second orientation different from the first orientation.

In some embodiments, a non-transitory computer-readable storage medium storing one or more programs configured to be executed by one or more processors of a computer system that is in communication with one or more input devices, wherein the computer system is executing a system process is described. In some embodiments, the one or more programs includes instructions for: receiving, from an application, an input corresponding to a request to manage an orientation of an object in a respective manner; after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and in response to detecting the input corresponding to the request to place the object at the first location in the environment: in accordance with a determination that the respective manner is a first manner, rendering the object in a first orientation; and in accordance with a determination that the respective manner is a second manner different from the first manner, rendering the object in a second orientation different from the first orientation.

In some embodiments, a transitory computer-readable storage medium storing one or more programs configured to be executed by one or more processors of a computer system that is in communication with one or more input devices, wherein the computer system is executing a system process is described. In some embodiments, the one or more programs includes instructions for: receiving, from an application, an input corresponding to a request to manage an orientation of an object in a respective manner; after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and in response to detecting the input corresponding to the request to place the object at the first location in the environment: in accordance with a determination that the respective manner is a first manner, rendering the object in a first orientation; and in accordance with a determination that the respective manner is a second manner different from the first manner, rendering the object in a second orientation different from the first orientation.

In some embodiments, a computer system configured to communicate with one or more input devices, wherein the computer system is executing a system process is described. In some embodiments, the computer system comprises one or more processors and memory storing one or more programs configured to be executed by the one or more processors. In some embodiments, the one or more programs includes instructions for: receiving, from an application, an input corresponding to a request to manage an orientation of an object in a respective manner; after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and in response to detecting the input corresponding to the request to place the object at the first location in the environment: in accordance with a determination that the respective manner is a first manner, rendering the object in a first orientation; and in accordance with a determination that the respective manner is a second manner different from the first manner, rendering the object in a second orientation different from the first orientation.

In some embodiments, a computer system configured to communicate with one or more input devices, wherein the computer system is executing a system process is described. In some embodiments, the computer system comprises means for performing each of the following steps: receiving, from an application, an input corresponding to a request to manage an orientation of an object in a respective manner; after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and in response to detecting the input corresponding to the request to place the object at the first location in the environment: in accordance with a determination that the respective manner is a first manner, rendering the object in a first orientation; and in accordance with a determination that the respective manner is a second manner different from the first manner, rendering the object in a second orientation different from the first orientation.

In some embodiments, a computer program product is described. In some embodiments, the computer program product comprises one or more programs configured to be executed by one or more processors of a computer system that is in communication with one or more input devices, wherein the computer system is executing a system process. In some embodiments, the one or more programs include instructions for: receiving, from an application, an input corresponding to a request to manage an orientation of an object in a respective manner; after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and in response to detecting the input corresponding to the request to place the object at the first location in the environment: in accordance with a determination that the respective manner is a first manner, rendering the object in a first orientation; and in accordance with a determination that the respective manner is a second manner different from the first manner, rendering the object in a second orientation different from the first orientation.

### DESCRIPTION OF THE FIGURES

FIG. 1 illustrates an example system architecture including various electronic devices that may implement the subject system in accordance with some examples.
FIG. 2 illustrates a block diagram of example features of an electronic device in accordance with some examples.
FIG. 3 is a block diagram illustrating a computer system in accordance with some examples.
FIGS. 4A-4C illustrate exemplary user interfaces for displaying 3D content in accordance with some embodiments.
FIG. 5 is a flow diagram illustrating a process for providing a viewing direction for 3D object based on a user position in accordance with some embodiments.
FIGS. 6A-6D illustrate exemplary user interfaces for managing rendering of 3D content in accordance with some embodiments.
FIG. 7 is a flow diagram illustrating a process for rendering a 3D object in a respective manner in accordance with some embodiments.
FIGS. 8A-8G illustrate an electronic system with which some examples of the subject technology may be implemented in accordance with some examples.

### DETAILED DESCRIPTION

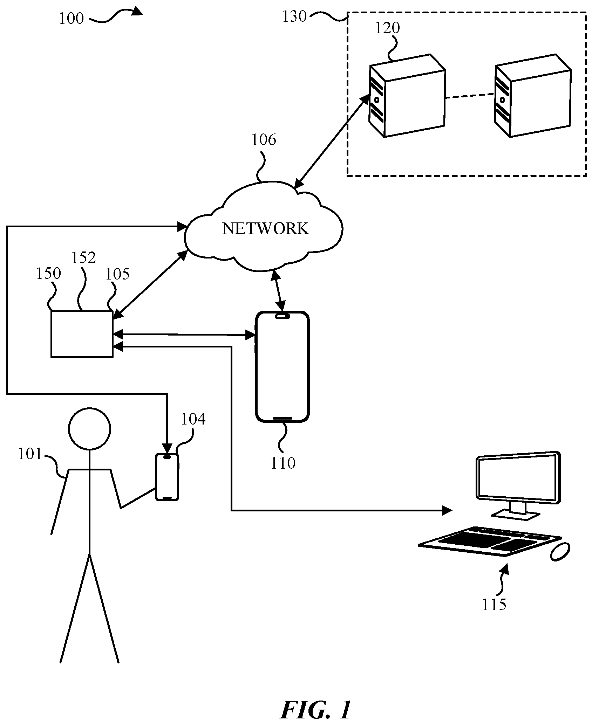

FIG. 1 illustrates an example system architecture 100 including various electronic devices that may implement the subject system in accordance with some embodiments. Not all of the depicted components may be used in all embodiments, however, and some embodiments may include additional or different components than those shown in the figure. Variations in the arrangement and type of the components may be made without departing from the spirit or scope of the claims as set forth herein. Additional components, different components, or fewer components may be provided.

The system architecture 100 includes an electronic device 105, a handheld electronic device 104, an electronic device 110, an electronic device 115, and a server 120. For explanatory purposes, the system architecture 100 is illustrated in FIG. 1 as including the electronic device 105, the handheld electronic device 104, the electronic device 110, the electronic device 115, and the server 120; however, the system architecture 100 may include any number of electronic devices, and any number of servers or a data center including multiple servers.

The electronic device 105 may be implemented, for example, as a tablet device, a smartphone, or as a head mountable portable system (e.g., worn by a user 101). The electronic device 105 includes a display system capable of presenting a visualization of an extended reality environment to the user. The electronic device 105 may be powered with a battery and/or another power supply. In an example, the display system of the electronic device 105 provides a stereoscopic presentation of the extended reality environment, enabling a three-dimensional visual display of a rendering of a particular scene, to the user. In some embodiments, instead of, or in addition to, utilizing the electronic device 105 to access an extended reality environment, the user may use a handheld electronic device 104, such as a tablet, watch, mobile device, and the like.

The electronic device 105 may include one or more cameras such as camera(s) 150 (e.g., visible light cameras, infrared cameras, etc.) For example, the electronic device 105 may include multiple cameras 150. For example, the multiple cameras 150 may include a left facing camera, a front facing camera, a right facing camera, a down facing camera, a left-down facing camera, a right-down facing camera, an up facing camera, one or more eye-facing cameras, and/or other cameras. Each of the cameras 150 may include one or more image sensors (e.g., charged coupled device (CCD) image sensors, complementary metal oxide semiconductor (CMOS) image sensors, or the like).

Further, the electronic device 105 may include various sensors 152 including, but not limited to, other cameras, other image sensors, touch sensors, microphones, inertial measurement units (IMU), heart rate sensors, temperature sensors, depth sensors (e.g., Lidar sensors, radar sensors, sonar sensors, time-of-flight sensors, etc.), GPS sensors, Wi-Fi sensors, near-field communications sensors, radio frequency sensors, etc. Moreover, the electronic device 105 may include hardware elements that can receive user input such as hardware buttons or switches. User inputs detected by such cameras, sensors, and/or hardware elements may correspond to, for example, various input modalities. For example, such input modalities may include, but are not limited to, facial tracking, eye tracking (e.g., gaze direction), hand tracking, gesture tracking, biometric readings (e.g., heart rate, pulse, pupil dilation, breath, temperature, electroencephalogram, olfactory), recognizing speech or audio (e.g., particular hotwords), and activating buttons or switches, etc. In some embodiments, facial tracking, gaze tracking, hand tracking, gesture tracking, object tracking, and/or physical environment mapping processes (e.g., system processes and/or application processes) may utilize images (e.g., image frames) captured by one or more image sensors of the cameras 150 and/or the sensors 152.

In some embodiments, the electronic device 105 may be communicatively coupled to a base device such as the electronic device 110 and/or the electronic device 115. Such a base device may, in general, include more computing resources and/or available power in comparison with the electronic device 105. In an example, the electronic device 105 may operate in various modes. For instance, the electronic device 105 can operate in a standalone mode independent of any base device. When the electronic device 105 operates in the standalone mode, the number of input modalities may be constrained by power and/or processing limitations of the electronic device 105 such as available battery power of the device. In response to power limitations, the electronic device 105 may deactivate certain sensors within the device itself to preserve battery power and/or to free processing resources.

The electronic device 105 may also operate in a wireless tethered mode (e.g., connected via a wireless connection with a base device), working in conjunction with a given base device. The electronic device 105 may also work in a connected mode where the electronic device 105 is physically connected to a base device (e.g., via a cable or some other physical connector) and may utilize power resources provided by the base device (e.g., where the base device is charging the electronic device 105 and/or providing power to the electronic device 105 while physically connected).

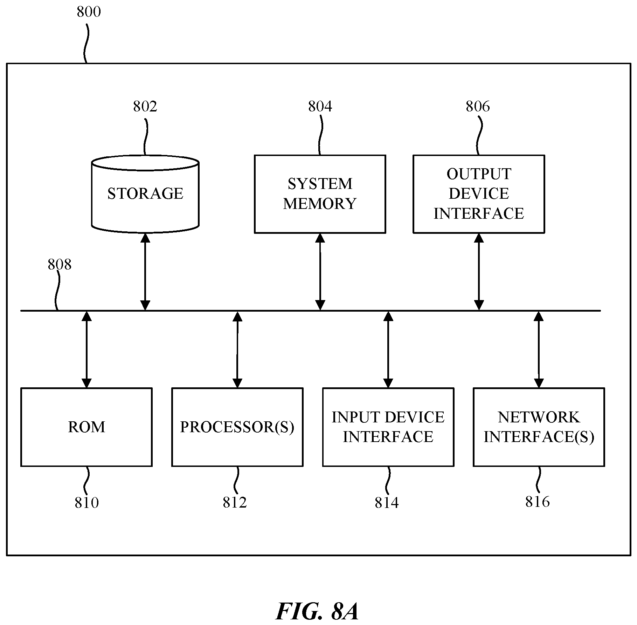

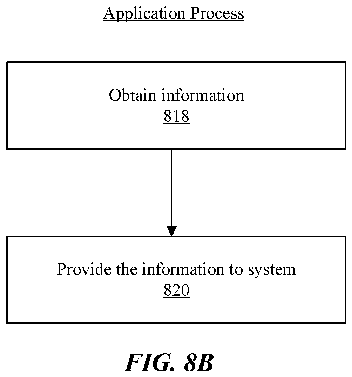

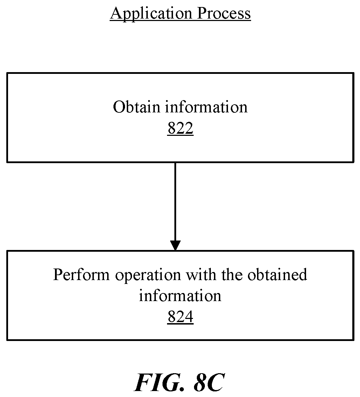

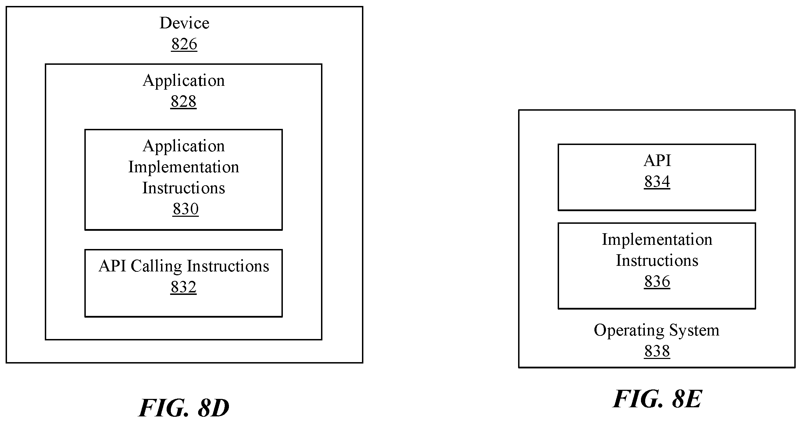

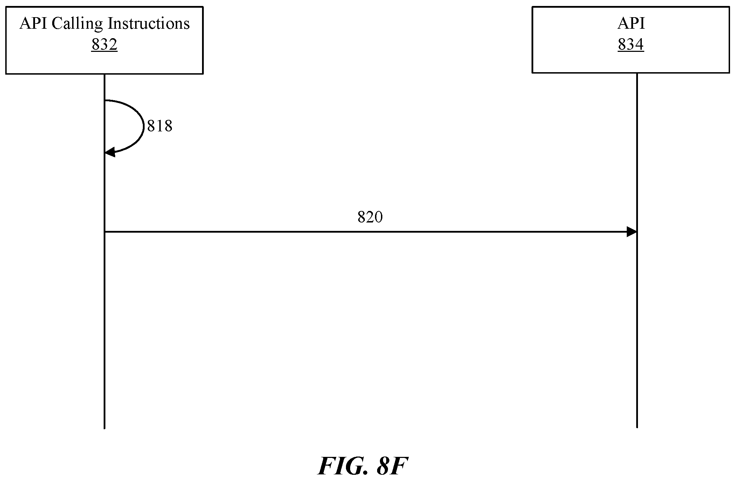

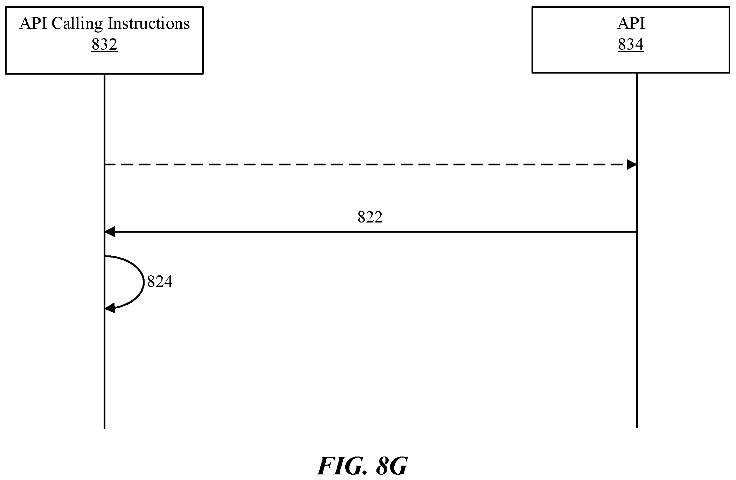

When the electronic device 105 operates in the wireless tethered mode or the connected mode, a least a portion of processing user inputs and/or rendering the extended reality environment may be offloaded to the base device thereby reducing processing burdens on the electronic device 105. For instance, in an example, the electronic device 105 works in conjunction with the electronic device 110 or the electronic device 115 to generate an extended reality environment including physical and/or virtual objects that enables different forms of interaction (e.g., visual, auditory, and/or physical or tactile interaction) between the user and the generated extended reality environment in a real-time manner. In an example, the electronic device 105 provides a rendering of a scene corresponding to the extended reality environment that can be perceived by the user and interacted with in a real-time manner, such as a host environment for a group session with another user. Additionally, as part of presenting the rendered scene, the electronic device 105 may provide sound, and/or haptic or tactile feedback to the user. The content of a given rendered scene may be dependent on available processing capability, network availability and capacity, available battery power, and current system workload. The electronic device 105 may be, and/or may include all or part of, the electronic system discussed below with respect to FIG. 8.

The network 106 may communicatively (directly or indirectly) couple, for example, the electronic device 105, the electronic device 110, and/or the electronic device 115 with each other device and/or the server 120. In some embodiments, the network 106 may be an interconnected network of devices that may include, or may be communicatively coupled to, the Internet.

The handheld electronic device 104 may be, for example, a smartphone, a portable computing device such as a laptop computer, a companion device (e.g., a digital camera, headphones), a tablet device, a wearable device such as a watch, a band, and the like, or any other appropriate device that includes, for example, one or more speakers, communications circuitry, processing circuitry, memory, a touchscreen, and/or a touchpad. In some embodiments, the handheld electronic device 104 may not include a touchscreen but may support touchscreen-like gestures, such as in an extended reality environment. In some embodiments, the handheld electronic device 104 may include a touchpad. In FIG. 1, by way of example, the handheld electronic device 104 is depicted as a tablet device.

The electronic device 110 may be, for example, a smartphone, a portable computing device such as a laptop computer, a companion device (e.g., a digital camera, headphones), a tablet device, a wearable device such as a watch, a band, and the like, or any other appropriate device that includes, for example, one or more speakers, communications circuitry, processing circuitry, memory, a touchscreen, and/or a touchpad. In some embodiments, the electronic device 110 may not include a touchscreen but may support touchscreen-like gestures, such as in an extended reality environment. In some embodiments, the electronic device 110 may include a touchpad. In FIG. 1, by way of example, the electronic device 110 is depicted as a tablet device. In some embodiments, the electronic device 110, the handheld electronic device 104, and/or the electronic device 105 may be, and/or may include all or part of, the electronic system discussed below with respect to FIG. 8A. In some embodiments, the electronic device 110 may be another device such as an Internet Protocol (IP) camera, a tablet, or a companion device such as an electronic stylus, etc.

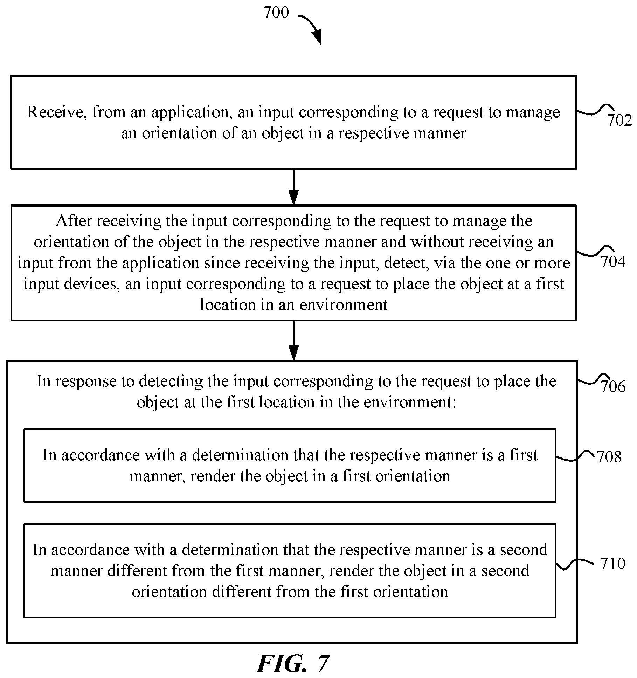

The electronic device 115 may be, for example, desktop computer, a portable computing device such as a laptop computer, a smartphone, a companion device (e.g., a digital camera, headphones), a tablet device, a wearable device such as a watch, a band, and the like. In FIG. 1, by way of example, the electronic device 115 is depicted as a desktop computer having one or more cameras 150 (e.g., multiple cameras 150). The electronic device 115 may be, and/or may include all or part of, the electronic system discussed below with respect to FIG. 7.

The server 120 may form all or part of a network of computers or a group of servers 130, such as in a cloud computing or data center implementation. For example, the server 120 stores data and software, and includes specific hardware (e.g., processors, graphics processors and other specialized or custom processors) for rendering and generating content such as graphics, images, video, audio and multimedia files for extended reality environments. In an example, the server 120 may function as a cloud storage server that stores any of the aforementioned extended reality content generated by the above-discussed devices and/or the server 120.

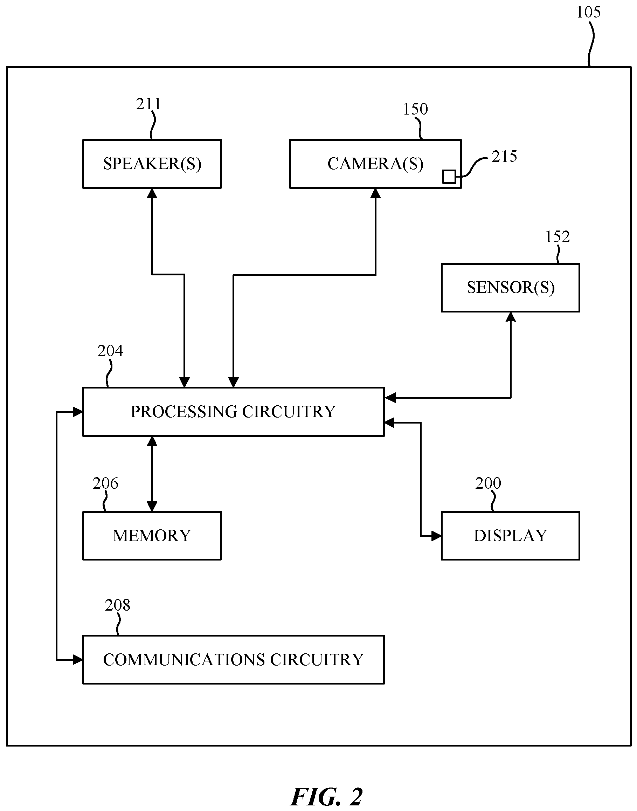

FIG. 2 illustrates a block diagram of various components that may be included in electronic device 105, in accordance with aspects of the disclosure. As shown in FIG. 2, electronic device 105 may include one or more cameras such as camera(s) 150 (e.g., multiple cameras 150, each including one or more image sensors 215) that capture images and/or video of the physical environment around the electronic device, one or more sensors 152 that obtain environment information (e.g., depth information) associated with the physical environment around the electronic device 105. Sensors 152 may include depth sensors (e.g., time-of-flight sensors, infrared sensors, radar, sonar, lidar, etc.), one or more microphones, and/or other types of sensors for sensing the physical environment. For example, one or more microphones included in the sensor(s) 152 may be operable to capture audio input from a user of the electronic device 105, such as a voice input corresponding to the user speaking into the microphones. In the example of FIG. 2, electronic device 105 also includes communications circuitry 208 for communication with electronic device 110, electronic device 115, servers 120, and/or other devices and/or systems in some embodiments. Communications circuitry 208 may include radio frequency (RF) communications circuitry for detecting radio frequency identification (RFID) tags, Bluetooth Low Energy (BLE) communications circuitry, other near-field communications (NFC) circuitry, Wi-Fi communications circuitry, cellular communications circuitry, and/or other wired and/or wireless communications circuitry.

As shown, electronic device 105 includes processing circuitry 204 (e.g., one or more processors and/or integrated circuits) and memory 206. Memory 206 may store (e.g., temporarily or permanently) content generated by and/or otherwise obtained by electronic device 105. In some operational scenarios, memory 206 may temporarily store images of a physical environment captured by camera(s) 150, depth information corresponding to the images generated, for example, using a depth sensor of sensors 152, meshes and/or textures corresponding to the physical environment, virtual objects such as virtual objects generated by processing circuitry 204 to include virtual content, and/or virtual depth information for the virtual objects. Memory 206 may store (e.g., temporarily or permanently) intermediate images and/or information generated by processing circuitry 204 for combining the image(s) of the physical environment and the virtual objects and/or virtual image(s) to form, e.g., composite images for display by display 200, such as by compositing one or more virtual objects onto a pass-through video stream obtained from one or more of the cameras 150.

As shown, the electronic device 105 may include one or more speakers 211. The speakers may be operable to output audio content, including audio content stored and/or generated at the electronic device 105, and/or audio content received from a remote device or server via the communications circuitry 208.

Memory 206 may store instructions or code for execution by processing circuitry 204, such as, for example operating system code corresponding to an operating system installed on the electronic device 105, and application code corresponding to one or more applications installed on the electronic device 105. The operating system code and/or the application code, when executed, may correspond to one or more operating system level processes and/or application level processes, such as processes that support capture of images, obtaining and/or processing environmental condition information, and/or determination of inputs to the electronic device 105 and/or outputs (e.g., display content on display 200) from the electronic device 105.

In some embodiments, one or more input devices include one or more camera sensors (e.g., one or more optical sensors and/or one or more depth camera sensors such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

Attention is now directed towards techniques for managing computer-generated environments. Such techniques are described in the context of receiving a request from one or more applications and responding to those requests with information, such as information content the size of a virtual object and/or a pose within an experience of a person. It should be recognized that other configurations can be used with techniques described herein. In addition, techniques optionally complement or replace other techniques for managing computer-generated environments.

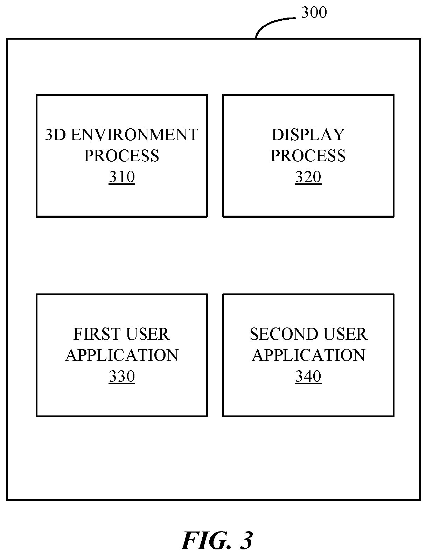

FIG. 3 is a block diagram illustrating a computer system (e.g., computer system 300) in accordance with some embodiments. In some embodiments, computer system 300 includes one or more components described above with respect to electronic device 105, handheld electronic device 104, electronic device 110, electronic device 115, and/or server 120 as shown in FIG. 1. Variations in the arrangement and type of the components can be made without departing from the spirit or scope of the claims as set forth herein. Additional components, different components, and/or fewer components can be used as well.

In some embodiments, computer system 300 loads, renders, manages, and/or displays computer-generated content in a 3D environment. The 3D environment can be virtual and/or physical, with the computer-generated content either completely covering a field-of-view of a user or supplementing the field-of-view. For example, computer system 300 can cause a virtual environment to be rendered and displayed to a user such that the user is provided content that is reactive to movements of the user. When the user moves around and performs different gestures, computer system 300 detects and processes the actions to provide tailored information to applications executing on computer system 300.

As illustrated in FIG. 3, computer system 300 includes 3D environment process 310, display process 320, first user application 330, and second user application 340. While FIG. 3 illustrates that each of these components are on a single computer system, it should be recognized that one or more components can be on another computer system in communication (e.g., wired and/or wireless communication) with computer system 300. In addition, while each component will be discussed separately, in some embodiments, the functionality of one or more components are combined together or separated further. In some embodiments, one or more components of computer system 300 communicate with other components via application programming interfaces (APIs), inter-process communications (IPCs), and/or serial peripheral interfaces (SPIs).

In some embodiments, 3D environment process 310 executes as a background process (e.g., a daemon, a service, a system process, an application process, and/or one or more instructions) to manage a 3D environment on behalf of one or more applications (e.g., first user application 350 and/or second user application 360). For example, 3D environment process 310 can create the 3D environment, manage a state of the 3D environment, receive requests from the one or more applications to render content in the 3D environment, cause display process 340 to display the 3D environment, and/or detect and process inputs from a number of different sources. In some embodiments, 3D environment process 310 receives 3D object models from first user application 330 and/or second user application 340 and renders them based on a current state of the environment and/or a user's viewpoint and/or position. In some embodiments, the user's viewpoint and/or position is obtained and/or determined through sensors, such as optical sensors, GPS sensors, Wi-Fi positioned sensors, cellular network sensors, Bluetooth beacons, and/or inertial sensors (e.g., accelerometers, gyroscopes, and/or magnetometers).

In some embodiments, 3D environment process 310 provides one or more APIs to be used by the one or more applications for setting up the 3D environment. In such embodiments, the APIs can work in a declarative form that allows for developers to create views, animations, and/or other user-interface elements without needing to configure the 3D environment imperatively. In some embodiments, 3D environment process 310 creates a scene via a scene graph, adds one or more entities to the scene, and/or causes the scene to be rendered.

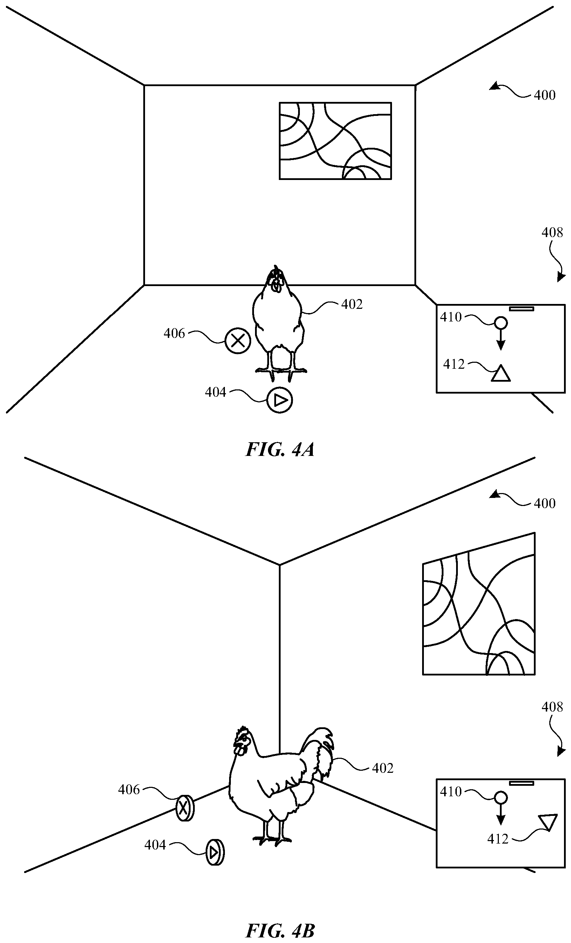

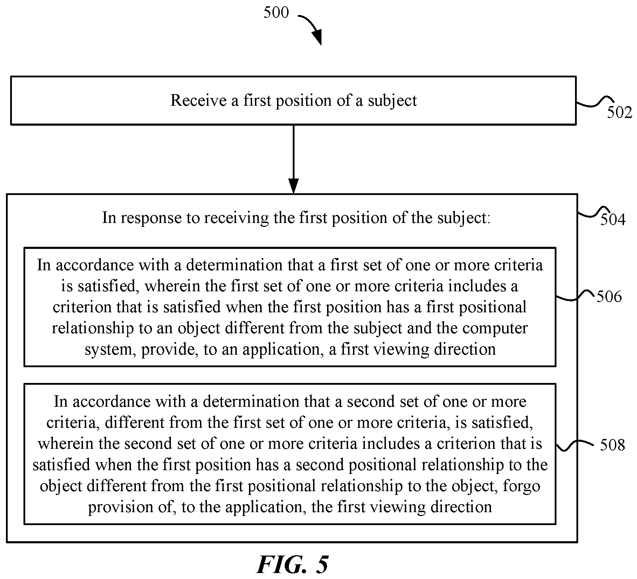

FIGS. 4A-4C illustrate management of a 3D object within an environment in accordance with some embodiments. These figures are used to illustrate the processes described below including the processes in FIG 5.

As mentioned above, 3D environment process 310 can receive a 3D object model from first user application 330 and render the 3D object model based on a current state of the environment and/or a user's viewpoint and/or position to produce a 3D object to be displayed by display process 320. In some embodiments, 3D environment process 310 can update the 3D object using the 3D object model as the 3D object moves and/or a user moves without requiring communication with first user application 330. Such updates can allow 3D environment process 310 to limit an amount of communication with and/or position information that first user application 330 receives while still being able to provide a 3D experience. However, there are certain scenarios where the 3D object model held by 3D environment process 310 needs to be updated and/or changed. To address these scenarios, 3D environment process 310 can request that first user application 330 provide a subset of user positions relative to the 3D object for which 3D environment process 310 will notify first user application 330 so that first user application 330 can update the 3D object model, provide a new 3D object model, render an update to the 3D object, and/or render a new 3D object. In some embodiments, the subset of user positions (e.g., front, left, right, and back or front, front left, front right, left, right, back left, back right, and back) relative to the 3D object provided by first user application 330 to 3D environment process 310 is based on a granularity required by the first application. For example, when first user application 330 requires high granularity, the subset of user positions relative to the 3D object would be greater number (e.g., divided into 8 different subsets rather than 4) than when first user application 330 requires lower granularity.

FIGS. 4A-4C illustrates environment 400 with multiple virtual objects (e.g., 3D chicken 402, play button 404, and exit button 408). In some embodiments, environment 400 is a physical and/or virtual environment. In such embodiments, the virtual objects can be displayed within and/or in a manner to appear as if they are within environment 400. The right side of FIGS. 4A-4C includes diagram 408. Diagram 408 is a visual aid representing locations of objects within environment 400. Diagram 408 includes user representation 412 as a position of a user within environment 400 and 3D object representation 410 as a position of 3D chicken 402, play button 404, and exit button 408 (sometimes collectively referred to as the 3D objects). Diagram 408 also illustrates an orientation and/or direction that the 3D objects are facing relative to the user (e.g., the arrow point toward the direction that the 3D objects are facing). It should be understood that the 3D objects are used as examples and that other 3D objects can be used with techniques described herein, including a geometrical figure, a character, a symbols, a representation of an inanimate object, and/or a representation of an animate object.

At FIG. 4A, the user is positioned so that the user is facing a backwall (e.g., the backwall is the wall with the painting) of environment 400. Prior to displaying the 3D objects, a user launches an application and requests the application to display the 3D objects. In response to the user's request, 3D environment process 310 receives one or more 3D models corresponding to the 3D objects from the application. For example, the application can send a 3D model for 3D chicken 402 and rely on 3D models provided by 3D environment 310 for play button 404 and exit button 408.

As described earlier, 3D environment process 310 is also provided predetermined positions (e.g., viewpoints and/or azimuths) where the application requests to be notified. Such positions can correspond to where the user is located relative to the 3D objects and/or where the 3D objects are located relative to the user. When the user is not located at the positions and/or has already been notified about the user being at one of the positions without moving away, 3D environment process 310 does not communicate with the application (e.g., the application does not know a position of the user outside of such communications). After receiving the one or more 3D models of the 3D objects, 3D environment process 310 renders and displays the 3D objects based on environment 400 and/or the user's viewpoint and/or position.

As illustrated in FIG. 4A, 3D chicken 402, play button 404, and exit button 408 are presented to the user with their respective height, width, and depth values. 3D chicken 402 is depicted from a front perspective view, such that 3D chicken 402 appears to the user as if the user is positioned directly in front of 3D chicken 402. Similarly, play button 404 and exit button 408 are presented from a front perspective viewpoint of the user. It should be understood that environment 400 can be seen through a display or a display area of a computer system, such as an HMD and/or smart glasses. In some embodiments, the display area is a display generation component, such as a translucent display and/or a display screen. In some embodiments, computer system 300 includes one or more components as those discussed above in relation to devices 105 and/or 110.

At FIG. 4A, because 3D environment process 310 received the one or more 3D models of the 3D objects from the application, position information of the user is not regularly provided to the application while 3D environment process 310 renders and displays the 3D objects. In some embodiments, 3D environment process 310 does not provide the application with the user's viewpoint and/or position until the user moves to the predetermined positions requested by the application. In some embodiments, the application can invoke an API that notifies environmental process 310 at which viewpoints the application should be alerted of a user's position and/or viewpoint.

As shown in diagram 408 of FIG. 4B, the user has moved approximately 45° to the left of the 3D objects from the user's position in FIG. 4A. As result of moving, the user is no longer directly facing the backwall, but is instead facing a corner of environment 400. Additionally, the painting on the backwall is positioned at the right side of the user due to the user's movement. At FIG. 4B, the 3D objects are shown from a side view. In some embodiments, 3D environment process 310 is able to render and generate the side view of the 3D objects from 3D models of 3D environment process 310 provided by the application. That is, due to 45° movement of the user, 3D environment process 310 does not need new data from the application to render and generate the 3D objects.

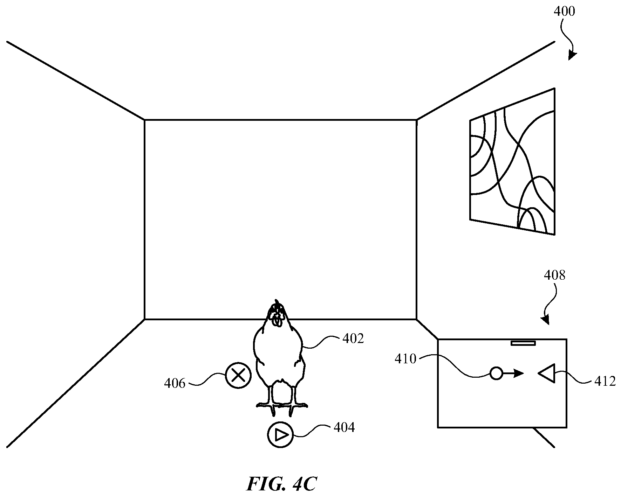

As shown in diagram 408 of FIG. 4C, the user has moved approximately another 45° left of the 3D objects from the user's position in diagram 408 of FIG. 4B. At FIG. 4C, the user is at one of the predetermined positions requested by the application. When the user is detected at one of the predetermined positions, environmental process 310 notifies the application of a current user position and/or viewpoint. For example, 3D environment process 310 can provide a relative position of the user and the 3D objects, such as that the user is to the left side of the 3D objects and/or that a viewpoint of the user is to the left side of the 3D objects. In response to being notified, the application determines and/or renders updates to the 3D objects to be sent to environmental process 310 so that environmental process 310 can render and/or display the 3D objects. In some embodiments, the updates include data used for animating the 3D objects, such as moving or changing a facial expression of 3D chicken 402. In some embodiments, the application is provided an exact position of the user and/or a viewpoint of the user from the 3D environment process 310 and/or another system process. At FIG. 4C, the 3D objects are shown in a front perspective view (e.g., as a result of the application causing the 3D objects to change orientation in response to being notified by environmental process 310).

The description above focuses on multiple 3D objects from a single application. It should be recognized that environment 400 can include objects from different applications. In some embodiments, 3D environment process 310 manages 3D objects for the different applications, such as by notifying particular applications when their 3D objects satisfy certain criteria for notification. Such criteria can include more than positions as described above. For example, such criteria can also or instead be based on whether a 3D object is in a field-of-view of a user, whether a 3D object is being looked at and/or focused on by a user, whether a user is interacting with and/or using a 3D object, and/or whether a user has provided other permission for such applications. It should also be recognized that applications can be notified with respect to other 3D objects of other application when a user has provided such permission.

FIG. 5 is a flow diagram illustrating a process (e.g., process 500) for providing a viewing direction for 3D object based on a user position in accordance with some embodiments. Some operations in process 500 are, optionally, combined, the orders of some operations are, optionally, changed, and some operations are, optionally, omitted.

As described below, process 500 provides an intuitive way for providing a viewing direction for 3D object based on a user position. Process 500 reduces the cognitive burden on a user, thereby creating a more efficient human-machine interface. For battery-operated computing devices, enabling a user to interact with such devices faster and more efficiently conserves power and increases the time between battery charges.

In some embodiments, process 500 is performed at a computer system that is executing a system process. In some embodiments, the computer system is a phone, a watch, a tablet, a fitness tracking device, a wearable device, an accessory, a speaker, a light, a head-mounted display (HMD), and/or a personal computing device. In some embodiments, the system process is part of an operating system of the computer system.

The system process receives (502) a first position (e.g., 412 as described with respect to FIG. 4A) (e.g., location, orientation, and/or gaze) of a subject (e.g., a user, a person, an animal, the computer system, another computer system different from the computer system, a device, and/or an object). In some embodiments, the computer system is in communication with and/or includes one or more inputs devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, receiving the first position includes detecting, via the one or more input devices, the first position of the subject. In some embodiments, receiving the first position includes receiving, from another computer system (e.g., a personal device of the subject) different from the computer system, the first position of the subject and/or a communication used to determine the first position of the subject.

In response to (504) receiving the first position of the subject, in accordance with a determination that a first set of one or more criteria is satisfied, wherein the first set of one or more criteria includes a criterion that is satisfied when the first position has a first positional relationship (e.g., 408 as described with respect to FIG. 4A) (e.g., a first position, such as a location and/or orientation, relative) to an object (e.g., 402) (e.g., physical object, virtual object, 2D object, and/or 3D object) different from the subject and the computer system, the system process provides (506) (e.g., outputs, transmits, sends and/or stores, in a location accessible), to an application (e.g., of the computer system or another computer system different from the computer system), a first viewing direction (e.g., as described with respect to FIG. 4A) (e.g., of the subject relative to the object, such as the subject is in the front of the object or to the left side of the object, or of the object relative to the subject, such as the object is in front of the subject or to the left of the subject) (and/or an indication that the subject or the object has the first viewing direction). In some embodiments, the first viewing direction is a view point, an orientation, and/or an azimuth for the object (e.g., relative to the subject) or for the subject (e.g., relative to the object). In some embodiments, the application is a user application, such as an application downloaded from another computer system different from the computer system. In some embodiments, the application is not part of the operating system of the computer system In some embodiments, the application is a home application, a note-taking application, a word-processing application, a document-processing application, a presentation application, an email application, a form processing application such as for PDF viewer and/or editor, a game, a messaging application, a maps application, a fitness application, a health application, a digital payments application, a media application, and/or a social network application. In some embodiments, the first position is received from the application of the computer system and/or another application of the computer system or another computer system different from the computer system and/or another computer system different from the computer system. In some embodiments, the first position is not received from the application.

In response to (504) receiving the first position of the subject, in accordance with a determination that a second set of one or more criteria, different from the first set of one or more criteria, is satisfied, wherein the second set of one or more criteria includes a criterion that is satisfied when the first position has a second positional relationship (e.g., 408 with respect to FIG. 4B) (e.g., a second position, such as a location and/or orientation, relative) to the object different from the first positional relationship to the object, the system process forgoes (508) provision (e.g., as described with respect FIGS. 4A-4B) (e.g., output, transmission, sending, and/or storage, in a location accessible) of, to the application, the first viewing direction.

In some embodiments, the object is a first object. In some embodiments, the application is a first application. In some embodiments, in response to receiving the first position of the subject, in accordance with a determination that a third set of one or more criteria (e.g., the first set of one or more criteria or another set of one or more criteria different from the third set of one or more criteria) is satisfied, wherein the third set of one or more criteria includes a criterion that is satisfied when the first position has a third positional relationship (e.g., a third position, such as a location and/or orientation, relative) (e.g., the first positional relationship or another positional relationship different from the first positional relationship) to a second object (e.g., physical object, virtual object, 2D object, and/or 3D object) (e.g., the first object or another object different from the first object) different from the subject and the computer system, the system process provides (e.g., as described with respect to FIG. 4B) (e.g., outputs, transmits, sends and/or stores, in a location accessible), to a second application (e.g., of the computer system or another computer system different from the computer system) different from the first application, a second viewing direction (e.g., of the subject relative to the second object or of the second object relative to the subject) (and/or an indication that the subject or the second object has the second viewing direction) (e.g., the first viewing direction or another viewing direction different from the first viewing direction). In some embodiments, the second viewing direction is a view point, an orientation, and/or an azimuth for the object (e.g., relative to the subject) or for the subject (e.g., relative to the object). In some embodiments, the second application is a user application, such as an application downloaded from another computer system different from the computer system. In some embodiments, the second application is not part of the operating system of the computer system In some embodiments, the second application is a home application, a note-taking application, a word-processing application, a document-processing application, a presentation application, an email application, a form processing application such as for PDF viewer and/or editor, a game, a messaging application, a maps application, a fitness application, a health application, a digital payments application, a media application, and/or a social network application. In some embodiments, the first position is received from the second application of the computer system and/or another application of the computer system or another computer system different from the computer system and/or another computer system different from the computer system. In some embodiments, the first position is not received from the second application. In some embodiments, in response to receiving the first position of the subject, in accordance with a determination that a fourth set of one or more criteria (e.g., the second set of one or more criteria or another set of one or more criteria different from the second set of one or more criteria), different from the third set of one or more criteria, is satisfied, wherein the fourth set of one or more criteria includes a criterion that is satisfied when the first position has a fourth positional relationship (e.g., a fourth position, such as a location and/or orientation, relative) (e.g., the second positional relationship or another positional relationship different from the second positional relationship) to the second object different from the third positional relationship to the second object, the system process forgoes provision (e.g., as described with respect to FIG. 4A) (e.g., output, transmission, sending, and/or storage, in a location accessible) of, to the second application, the second viewing direction.

In some embodiments, the application is a first application. In some embodiments, in response to receiving the first position of the subject (e.g., 412) and in accordance with a determination that a fifth set of one or more criteria, different from the first set of one or more criteria and the second set of one or more criteria, is satisfied, the system process forgoes provision (e.g., output, transmission, sending, and/or storage, in a location accessible) of, to an application, a viewing direction (e.g., of the subject relative to the object or of the object relative to the subject). In some embodiments, the fifth set of one or more criteria includes a criterion that is satisfied when the first position has a fifth positional relationship (e.g., a second position, such as a location and/or orientation, relative) (e.g., the second positional relationship or another positional relationship different from the second positional relationship) to the object different from the first positional relationship to the object.

In some embodiments, the first position includes a location, an orientation, a gaze direction of a subject (e.g., 412) (e.g., a user, a person, an animal, another computer system different from the computer system, a device, and/or an object), or any combination thereof.

In some embodiments, the first viewing direction is a viewing direction from a set of one or more predefined viewing directions (e.g., as described with respect to FIG. 4C). In some embodiments, the set of one or more predefined viewing directions is predefined by the application. In some embodiments, the set of one or more predefined viewing directions predefined by the system process. In some embodiments, the set of one or more predefined viewing directions is selected by the application. In some embodiments, the first viewing direction is different from the first position and/or the first positional relationship. In some embodiments, the first viewing direction is an abstraction of the first positional relationship (e.g., front, back, left side, or right side instead of an x, y, and z position).

In some embodiments, the system process receives a second position (e.g., location, orientation, and/or gaze) of the subject different from the first position of the subject (e.g., 412). In some embodiments, receiving the second position includes detecting, via the one or more input devices, the second position of the subject. In some embodiments, receiving the second position includes receiving, from another computer system (e.g., a personal device of the subject) different from the computer system, the second position of the subject and/or a communication used to determine the second position of the subject. In some embodiments, in response to receiving the second position of the subject and in accordance with a determination that the first set of one or more criteria is satisfied, wherein the first set of one or more criteria includes a criterion that is satisfied when the first position has the first positional relationship to the object, the system process provides (e.g., outputs, transmits, sends and/or stores, in a location accessible), to the application, the first viewing direction (e.g., as described with respect to FIG. 4C). In some embodiments, in response to receiving the second position of the subject and in accordance with a determination that a sixth set of one or more criteria, different from the first set of one or more criteria and the second set of one or more criteria, is satisfied, wherein the sixth set of one or more criteria includes a criterion that is satisfied when the first position has a sixth positional relationship (e.g., a sixth position, such as a location and/or orientation, relative) to the object, the system process provides (e.g., outputs, transmits, sends and/or stores, in a location accessible), to the application, the first viewing direction.

In some embodiments, the system process receives a third position (e.g., location, orientation, and/or gaze) of the subject different from the first position of the subject. In some embodiments, receiving the third position includes detecting, via the one or more input devices, the third position of the subject. In some embodiments, receiving the third position includes receiving, from another computer system (e.g., a personal device of the subject) different from the computer system, the third position of the subject and/or a communication used to determine the second third of the subject. In some embodiments, in response to receiving the third position of the subject and in accordance with a determination that a seventh set of one or more criteria, different from the first set of one or more criteria and the second set of one or more criteria, is satisfied, wherein the seventh set of one or more criteria includes a criterion that is satisfied when the third position has a seventh positional relationship, different from the first positional relationship and the second positional relationship, (e.g., a seventh position, such as a location and/or orientation, relative) to the object (e.g., 402), the system process provides (e.g., outputs, transmits, sends and/or stores, in a location accessible), to the application, a third viewing direction different from the first viewing direction (e.g., as described with respect to FIG. 4B).

In some embodiments, the object (e.g., 402) is a volume (e.g., a three dimensional volume and/or a three dimensional object in a virtual environment).

In some embodiments, the object is a virtual object rendered by the application (e.g., as described with respect to FIGS. 4A-4C). In some embodiments, the object is a virtual object rendered by the system process.

In some embodiments, the object is a virtual control (e.g., 406 and/or 404) (e.g., rendered by the system process or the application). In some embodiments, the computer system is in communication with one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface) and one or more display generation components (e.g., a display screen, a projector, a head mounted display, and/or a touch-sensitive display). In some embodiments, while displaying, via the one or more display generation components, the object, the computer system (e.g., the system process, the application, or another process different from the system process and the application) detects, via the one or more input devices, an input (e.g., a selection input and/or a non-selection input) corresponding to the object. In some embodiments, the input corresponding to the object is a gaze input at the object and a pinch gesture input. In some embodiments, in response to detecting the input corresponding to the object, the computer system performs (e.g., via the system process and/or the application) an operation based on the input corresponding to the object.

In some embodiments, the first set of one or more criteria includes a criterion that is satisfied when the application requested to be notified (e.g., by the system process) in response to a viewing direction (e.g., of the subject relative to the object or of the object relative to the subject) being the first viewing direction (e.g., as described with respect to FIG. 4A and FIG. 4C). In some embodiments, the first set of one or more criteria includes a criterion that is satisfied when the application requested to be notified (e.g., by the system process) in response to a determination that a current position of the subject has the first positional relationship to the object. In some embodiments, the second set of one or more criteria includes a criterion that is satisfied when the application requested not to be notified (e.g., by the system process) in response to a viewing direction (e.g., of the subject relative to the object or of the object relative to the subject) being the first viewing direction. In some embodiments, the second set of one or more criteria includes a criterion that is satisfied when the application requested to not be notified (e.g., by the system process) in response to a determination that a current position of the subject has the first positional relationship to the object. In some embodiments, the second set of one or more criteria includes a criterion that is satisfied when the application has not requested to be notified (e.g., by the system process) in response to a viewing direction (e.g., of the subject relative to the object or of the object relative to the subject) being the first viewing direction. In some embodiments, the second set of one or more criteria includes a criterion that is satisfied when the application has not requested to be notified (e.g., by the system process) in response to a determination that a current position of the subject has the first positional relationship to the object.

In some embodiments, the first set of one or more criteria includes a criterion that is satisfied when a first user interface of the application is in a field-of-view of the subject (e.g., as described with respect to FIG. 4A). In some embodiments, the first user interface includes the object. In some embodiments, the second set of one or more criteria includes a criterion that is satisfied when the first user interface of the application is not in the field-of-view of the subject. In some embodiments, the second set of one or more criteria includes a criterion that is satisfied when a user interface of the application is not in the field-of-view of the subject.

In some embodiments, the first set of one or more criteria includes a criterion that is satisfied when a second user interface (e.g., the first user interface or another user interface different from the first user interface) of the application is being focused on (e.g., interacted and/or looked at) by the subject (e.g., as described with respect to FIG. 4C). In some embodiments, the second user interface includes the object. In some embodiments, the second set of one or more criteria includes a criterion that is satisfied when the second user interface of the application is not being focused on by the subject. In some embodiments, the second set of one or more criteria includes a criterion that is satisfied when a user interface of the application is not being focused on by the subject.

In some embodiments, the system process does not receive an input from the application after receiving a request to manage (e.g., display, monitor, and/or track) the object (e.g., from the application) and before providing the first viewing direction to the application (e.g., as described with respect to FIGS. 4A-4C). In some embodiments, the system process receives multiple different positions of the subject after receiving the request to manage (e.g., display, monitor, and/or track) the object (e.g., from the application) and before providing the first viewing direction to the application. In some embodiments, the system provides multiple different viewing directions to the application after receiving the request to manage (e.g., display, monitor, and/or track) the object (e.g., from the application) and before providing the first viewing direction to the application.

In some embodiments, another system process, different (and/or separate) from the system process, renders (e.g., generates, displays, and/or causes display of) the object (e.g., 402).

In some embodiments, the system process renders (e.g., generates, displays, and/or causes display of) the object (e.g., 402).

Note that details of the processes described above with respect to process 500 (e.g., FIG. 5) are also applicable in an analogous manner to other processes described herein. For example, process 700 optionally includes one or more of the characteristics of the various processes described above with reference to process 500. For example, the 3D object of method 500 can be rendered based one of the manners of method 700. For brevity, these details are not repeated herein.

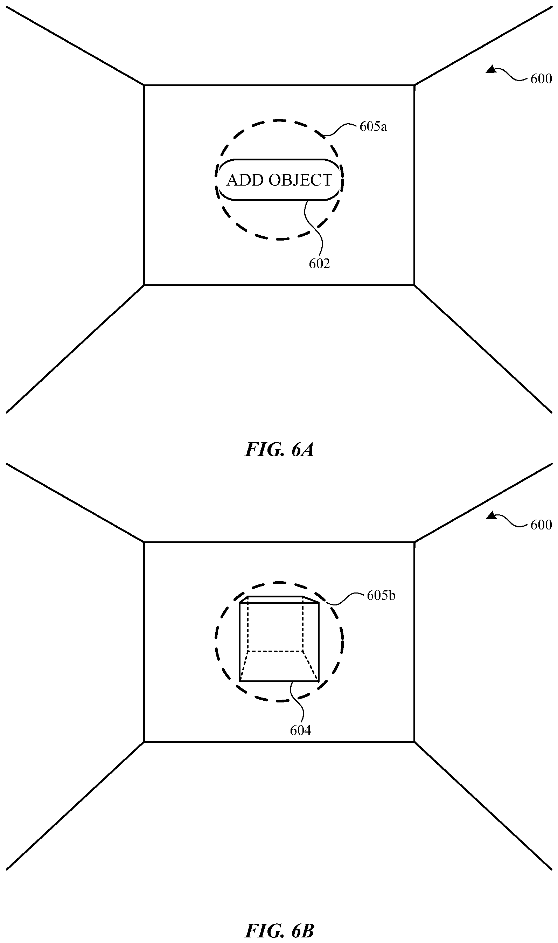

FIGS. 6A-6D illustrates presentation of a 3D object within an environment in accordance with some embodiments. These figures are used to illustrate the processes described below including the processes in FIG 7.

It should be recognized that FIGS. 6A-6D can use one or more of the same aspects discussed above. For example, 3D environment process 310 can receive a 3D object model from first user application 330 and render the 3D object model based on a current state of the environment and/or a user's viewpoint and/or position to produce a 3D object to be displayed by display process 320. In some embodiments, such rendering can take into account lighting and/or shadows in an environment. For example, 3D environment process 310 can render a shadow for a 3D object based on the user's position and/or viewpoint relative to a light source. In some embodiments, 3D environment process 310 adjusts an orientation and/or a texture of a 3D object based on a user's viewpoint and/or position relative to the 3D object. For example, 3D environment process 310 can render the 3D object in more detail as the user moves closer to the 3D object. In some embodiments, 3D environment process 310 can also change an orientation of a 3D object based on user input and the user's viewpoint and/or position. For example, a 3D object can be rendered so that a pitch value (e.g., rotation around an x axis), a yaw value (e.g., rotation around a y-axis), and/or a roll value (e.g., rotation around a z-axis) of the 3D object is changed based on user's viewpoint as users input moves the 3D object around.

At FIG. 6A, add object button 602 is displayed in environment 600 by computer system 300. Prior to displaying add object 602, a user launches an application. After the application is launched (and/or during a previous launch), 3D environment process 310 receives one or more 3D models from the application for displaying content related to the application. In some embodiments, 3D environment process 310 also has its own 3D models for one or more user interface objects. Such 3D models are not provided to 3D environment process 310 by an application but can be used by the application. For example, add object button 602 can be a built-in 3D model of 3D environment process 310. Similar to the discussion above, because 3D environment process 310 has a 3D model for a 3D object being displayed, communication with the application can be limited and the user's privacy can be protected.

In some embodiments, add object button 602 allows the user to add, select, view, and/or manipulate a 3D object within environment 600. In this example, the user selects 3D cube 604 to be added to environment 600. At FIG. 6A, computer system 300 detects input 605a at add object button 602. In some embodiments, input 605a is an air gesture input such as an air tap directed at a position corresponding to add object button 602. In some embodiments, input 605a is a gaze input detected at the position corresponding to add object button 602 for a predetermined period of time. In some embodiments, input 605a is combination of gaze at the position corresponding to add object button 602 and a tap input. In some embodiments, add object 602 button is not displayed in environment 607 by computer system 300. In such examples, a user may use a predetermined gestured to add, select, view, and/or manipulate the 3D object within environment 600.

At FIG. 6B, in response to detecting input 605a, 3D cube 604 is displayed within environment 600 by computer system 300. In some embodiments, 3D environment process 310 uses a 3D model for 3D cube 604 to render and display 3D cube 604 within environment 600. As illustrated in FIG. 6B, 3D cube 604 is displayed at a first location with off a floor of environment 600 with a first orientation. At FIG. 6B, computer system 300 detects input 605b at 3D cube 604. In some embodiments, input 605b is an input to move 3D cube 604 to a second position within environment 600. In some embodiments, 3D environment process 310 is able to render and display 3D cube 604 without communicating with the application since 3D environment process 310 has the 3D model for 3D cube 604.

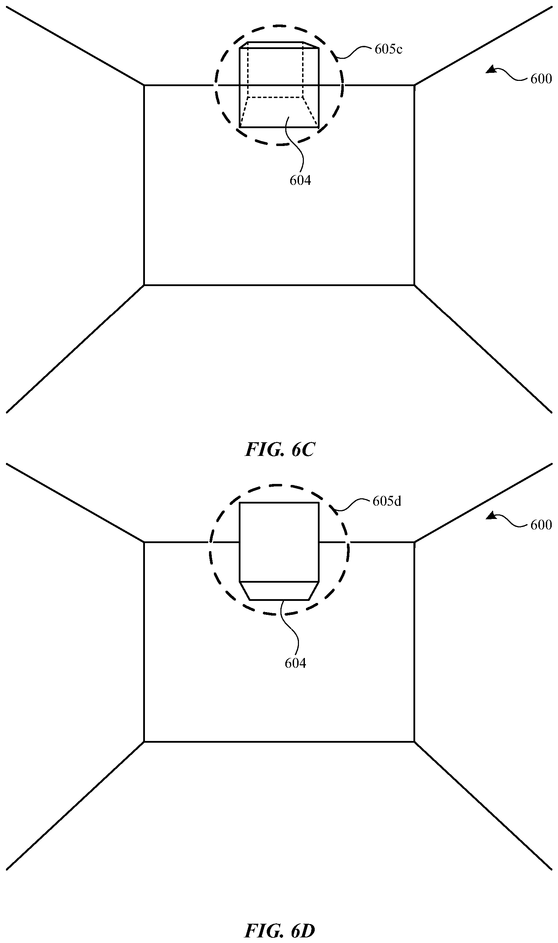

FIG. 6C and FIG. 6D present two different manners in which 3D environment process 310 can render 3D cube 604 as 3D cube 604 is moved in environment 600. Such manners can be defined by the application and maintained by 3D environment process 310. For example, one manner (e.g., as illustrated in FIG. 6C, sometimes referred to as an adaptive mode, and discussed further below) can cause an orientation of 3D cube 604 to maintain an orientation with respect to a user as 3D cube 604 is moved around (e.g., effectively rotating 3D cube 604 within environment 600 to maintain a consistent orientation with the user without rendering a rotation of 3D cube 604 as 3D cube 604 is moved). Another manner (e.g., as illustrated in FIG. 6D, sometimes referred to as an environment mode, and discussed further below) can cause an orientation of 3D cube 604 to maintain an orientation with respect to environment 600 as 3D cube 604 is moved around (e.g., effectively not rotating 3D cube 604 within environment 600 to maintain a consistent orientation with environment 600 by rendering a rotation of 3D cube 604 as 3D cube 604 is moved). It should be recognized that such manners are used as examples and that techniques described herein can use more and/or different manners than illustrated. In some embodiments, one of the modes (e.g., the adaptive mode or the environment mode) is set as a default mode. In such embodiments, a user and/or the application can select a different mode to be used for 3D cube 604.

At FIG. 6C, in response to detecting input 605b while the application has configured 3D cube 604 to be rendered in the adaptive mode via an API, 3D cube 604 is displayed within environment 600 at a higher position than in FIG. 6B but with the same tilt value as illustrated in FIG. 6B. Such movement can be a result of input 605b being a continuation of 605a, moving in an upward direction relative to FIG. 6B. In some embodiments, 3D environment process 310 is able to render and display 3D cube 604 without communicating with the application since 3D environment process 310 has the 3D model for 3D cube 604.

At FIG. 6D (as an alternate to FIG. 6C), in response to detecting input 605d while the application has configured 3D cube 604 to be rendered in the environment mode via an API, 3D cube 604 is displayed within environment 600 at a higher position than in FIG. 6B but with a different tilt value than illustrated in FIG. 6B. For example, 3D cube 604 can be rendered in a manner that appears as if the user is viewing the object in real life. That is, as the object is moved up, the user views more of the bottom of 3D cube 604. Likewise, as 3D cube 604 is moved down, the user views more of the top of 3D cube 604 and less of the bottom. Such movement can be a result of input 605d being a continuation of 605a, moving in an upward direction relative to FIG. 6B. In some embodiments, 3D environment process 310 is able to render and display 3D cube 604 without communicating with the application since 3D environment process 310 has the 3D model for 3D cube 604.

The description above focuses on a single 3D object from a single application. It should be recognized that environment 600 can include multiple objects from one or more applications. In some embodiments, 3D environment process 310 manages the multiple objects and can have different objects being rendered in different modes at the same time.

FIG. 7 is a flow diagram illustrating a process (e.g., process 700) for rendering a 3D object in a respective manner in accordance with some embodiments. Some operations in process 700 are, optionally, combined, the orders of some operations are, optionally, changed, and some operations are, optionally, omitted.

As described below, process 700 provides an intuitive way for rendering a 3D object in a respective manner. Process 700 reduces the cognitive burden on a user, thereby creating a more efficient human-machine interface. For battery-operated computing devices, enabling a user to interact with such devices faster and more efficiently conserves power and increases the time between battery charges.

In some embodiments, process 700 is performed at a computer system that is in communication with (and/or includes) one or more input devices (e.g., a camera, a depth sensor, a microphone, a hardware input mechanism, a rotatable input mechanism, a heart monitor, a temperature sensor, and/or a touch-sensitive surface). In some embodiments, the computer system is executing a system process. In some embodiments, the computer system is a phone, a watch, a tablet, a fitness tracking device, a wearable device, an accessory, a speaker, a light, a head-mounted display (HMD), and/or a personal computing device. In some embodiments, the system process is part of and/or executing on behalf of an operating system of the computer system.

The system process receives (702), from an application (e.g., of the computer system or another computer system different from the computer system), an input (e.g., 605a) corresponding to (e.g., related to and/or associated with) a request to manage (control, select, and/or determine) an orientation of (e.g., a viewpoint of, an angle of, a tilt of, a direction of, a pitch of, a yaw of, and/or a roll value of) an object (e.g., 604) (e.g., physical object, virtual object, 2D object, and/or 3D object) in a respective manner. In some embodiments, the application is a user application, such as an application downloaded from another computer system different from the computer system. In some embodiments, the application is not part of the operating system of the computer system. In some embodiments, the application is a home application, a note-taking application, a word-processing application, a document-processing application, a presentation application, an email application, a form processing application such as for PDF viewer and/or editor, a game, a messaging application, a maps application, a fitness application, a health application, a digital payments application, a media application, and/or a social network application.

After receiving the input (e.g., 605) corresponding to the request to manage the orientation of the object in the respective manner and without receiving an input from the application since receiving the input corresponding to the request to manage the orientation of the object in the respective manner, the system process detects (704), via the one or more input devices, an input (e.g., a selection input and/or a non-selection input) corresponding to (e.g., related to, and/or associated with) a request to place the object at a first location in an environment (e.g., a physical environment and/or a virtual environment). In some embodiments, the input corresponding to the request to place the object at the first location in the environment is a tap gesture at the first location or at a representation of the first location in the environment.

In response to (706) detecting the input corresponding to the request to place the object at the first location in the environment, in accordance with a determination that the respective manner is a first manner, the system process renders (708) (e.g., generates and/or creates) the object in a first orientation (e.g., as described with respect to FIGS. 6A-6B) (e.g., relative to a subject in the environment or relative to gravity in the environment). In some embodiments, the subject is a user, a person, an animal, the computer system, another computer system different from the computer system, a device, and/or an object. In some embodiments, after and/or in response to rendering the object in the first orientation, the system process causes the object to be displayed in the first orientation at the first location in the environment, sends an indication of the first orientation to the application, and/or sends the object in the first orientation to the application.

In response to (706) detecting the input corresponding to the request to place the object at the first location in the environment, in accordance with a determination that the respective manner is a second manner different from the first manner, the system process renders (710) (e.g., generates and/or creates) the object in a second orientation (e.g., as described with respect to FIG. 6D) different from the first orientation. In some embodiments, after and/or in response to rendering the object in the second orientation, the system process causes the object to be displayed in the second orientation at the first location in the environment, sends an indication of the second orientation to the application, and/or sends the object in the second orientation to the application.

In some embodiments, the application is a first application. In some embodiments, the object is a first object (e.g., 604). In some embodiments, the system process receives, from a second application (e.g., of the computer system or another computer system different from the computer system) different from the first application, an input corresponding to a request to manage (control, select, and/or determine) an orientation of (e.g., a viewpoint of, an angle of, a tilt of, a direction of, a pitch of, a yaw of, and/or a roll value of) a second object (e.g., as described with respect to FIGS. 6A-6D) (e.g., physical object, virtual object, 2D object, and/or 3D object), different from the first object, in a respective manner. In some embodiments, the second application is a user application, such as an application downloaded from another computer system different from the computer system. In some embodiments, the second application is not part of the operating system of the computer system. In some embodiments, the second application is a home application, a note-taking application, a word-processing application, a document-processing application, a presentation application, an email application, a form processing application such as for PDF viewer and/or editor, a game, a messaging application, a maps application, a fitness application, a health application, a digital payments application, a media application, and/or a social network application. In some embodiments, after receiving the input corresponding to the request to manage the orientation of the second object in the respective manner and without receiving an input from the second application since receiving the input corresponding to the request to manage the orientation of the second object in the respective manner, the system process detects, via the one or more input devices, an input (e.g., a selection input and/or a non-selection input) corresponding to (e.g., related to, and/or associated with) a request to place the second object at a first location in the environment or another environment (e.g., a physical environment and/or a virtual environment) different from the environment. In some embodiments, the input corresponding to the request to place the object at the first location in the environment is a tap gesture at a representation of the first location in the environment. In some embodiments, in response to detecting the input corresponding to the request to place the second object at the first location and in accordance with a determination that the respective manner is a first manner, the system process renders (e.g., generates and/or creates) the object in a first orientation (e.g., relative to a subject or relative to gravity). In some embodiments, after and/or in response to rendering the second object in the first orientation, the system process causes the second object to be displayed in the first orientation at the first location, sends an indication of the first orientation to the application, and/or sends the object in the first orientation to the application. In some embodiments, in response to detecting the input corresponding to the request to place the second object at the first location and in accordance with a determination that the respective manner is a second manner different from the first manner, the system process renders (e.g., generates and/or creates) the second object in a second orientation different from the first orientation. In some embodiments, after and/or in response to rendering the second object in the second orientation, the system process causes the second object to be displayed in the second orientation at the first location, sends an indication of the second orientation to the application, and/or sends the second object in the second orientation to the application.

In some embodiments, the object is a first object (e.g., 604). In some embodiments, the respective manner is a first respective manner. In some embodiments, the environment is a first environment. In some embodiments, the system process receives, from the application (e.g., of the computer system or another computer system different from the computer system), an input corresponding to (e.g., related to and/or associated with) a request to manage (control, select, and/or determine) an orientation of (e.g., a viewpoint of, an angle of, a tilt of, a direction of, a pitch of, a yaw of, and/or a roll value of) a second object (e.g., physical object, virtual object, 2D object, and/or 3D object), different from the first object, in a second respective manner different from the first respective manner. In some embodiments, after receiving the input corresponding to the request to manage the orientation of the second object in the second respective manner and without receiving an input from the application since receiving the input corresponding to the request to manage the orientation of the second object in the second respective manner, the system process detects, via the one or more input devices, an input (e.g., 605b) (e.g., a selection input and/or a non-selection input) corresponding to (e.g., related to, and/or associated with) a request to place the second object at a second location (e.g., as described in with respect to FIG. 6C) (e.g., the first location or another location different from the first location) in a second environment (e.g., a physical environment and/or a virtual environment) (e.g., the first environment or another environment different from the first environment). In some embodiments, the input corresponding to the request to place the second object at the second location in the second environment is a tap gesture at a representation of the second location in the second environment. In some embodiments, in response to detecting the input corresponding to the request to place the second object at the second location in the second environment, in accordance with a determination that the second respective manner is the first manner, the system process renders (e.g., generates and/or creates) the second object in a third orientation (e.g., as described with respect to FIG. 6C) (e.g., relative to a subject in the second environment or relative to gravity in the second environment) (e.g., the first orientation or another orientation different from the first orientation). In some embodiments, after and/or in response to rendering the second object in the third orientation, the system process causes the second object to be displayed in the third orientation at the second location, sends an indication of the third orientation to the application, and/or sends the second object in the third orientation to the application. In some embodiments, in response to detecting the input corresponding to the request to place the second object at the second location in the second environment, in accordance with a determination that the second respective manner is a second manner different from the first manner, the system process renders (e.g., generates and/or creates) the second object in a fourth orientation (e.g., as described with respect to FIG. 6D) (e.g., the second orientation or another orientation different from the second orientation) different from the third orientation. In some embodiments, after and/or in response to rendering the second object in the fourth orientation, the system process causes the second object to be displayed in the fourth orientation at the second location, sends an indication of the fourth orientation to the application, and/or sends the second object in the fourth orientation to the application.

In some embodiments, the input corresponding to the request to place the object at the first location in the environment includes a gaze input (e.g., as described with respect to FIGS. 6A-6D) (e.g., of a subject in the environment and/or using the computer system).

In some embodiments, the input corresponding to the request to place the object at the first location in the environment includes a movement input (e.g., as described with respect to FIGS. 6A-6D). In some embodiments, a movement input is an input that starts at a first position and moves to a second position different from the first position. In some embodiments, the movement input ends at the second position or moves back to the first position. Examples of a movement input include a swipe gesture input, a flick gesture input, movement of a subject, movement of a mouse, movement of an input on a touch-sensitive surface, an air gesture moving from one location to another, rotation of a physical input mechanism, and/or rotation of an electronic stylus.

In some embodiments, the input corresponding to the request to place the object at the first location in the environment includes a selection input (e.g., as described with respect to FIG. 6A). In some embodiments, a selection input is an input that chooses and/or selects a subject (e.g., an element, a user interface element, a user interface object, a user interface, a person, a user, an animal, an electronic device, a computer system, and/or an object) from multiple subjects or a state from multiple states. In some embodiments, a selection input specifies a subject in which to perform an operation. Examples of a selection input include a tap input, a verbal input, an audible command, a gaze input, an air gesture input, a mouse click, a squeeze input of a portion of an electronic stylus, a blink of one or more eyes of a subject, depression of rotatable input mechanism, and/or a submission of a physical hardware element.

In some embodiments, after rendering the object in the first manner (e.g., and with or without receiving an input from the application since receiving the input corresponding to the request to manage the orientation of the object in the respective manner), the system process detects, via the one or more input devices, an input corresponding to a request to place the object at a second location in the environment different from the first location in the environment. In some embodiments, the input corresponding to the request to place the object at the second location in the environment is a tap gesture at the second location or at a representation of the second location in the environment. In some embodiments, in response to detecting the input corresponding to the request to place the object at the second location in the environment, in accordance with a determination that the respective manner is the first manner, the system process renders (e.g., generates and/or creates) the object in the first orientation (e.g., as described with respect to FIG. 6B) (e.g., based on receiving the input corresponding to the request to manage the orientation of the object in the respective manner). In some embodiments, after and/or in response to rendering the object in the first orientation in response to detecting the input corresponding to the request to place the object at the second location in the environment, the system process causes the object to be displayed in the first orientation at the second location in the environment, sends an indication of the first orientation to the application, and/or sends the object in the first orientation to the application. In some embodiments, in response to detecting the input corresponding to the request to place the object at the second location in the environment, in accordance with a determination that the respective manner is the second manner, the system process renders (e.g., generates and/or creates) the object in a third orientation different from the first orientation and the second orientation (e.g., as described with respect to FIG. 6D) (e.g., based on receiving the input corresponding to the request to manage the orientation of the object in the respective manner). In some embodiments, after and/or in response to rendering the object in the second orientation, the system process causes the object to be displayed in the third orientation at the second location, sends an indication of the third orientation to the application, and/or sends the object in the third orientation to the application.

In some embodiments, the first manner is relative to a viewing direction (e.g., a gaze, a viewpoint, and/or a field-of-view) of a subject (e.g., as described with respect to FIG. 6B) (e.g., in the environment and/or using the computer system) (e.g., the orientation of the object is adaptive to the viewing of the subject such that the object appears to be in same orientation to subject no matter where the object is located).

In some embodiments, the second manner is relative to a coordinate space of the environment (e.g., as described with respect to FIG. 6D) (e.g., the orientation of the object is not adaptative to the viewing of the subject but rather is based on a location of the object within the coordinate space of the environment such that the object appears to be in different orientations to subject depending on where the object is located).

In some embodiments, rendering the object in the first orientation includes adding shading, lighting, or any combination thereof to the object based on the environment (e.g., as described with respect to FIGS. 6A-6C) (e.g., different locations and/or environments cause different shading and/or lighting of the object). In some embodiments, rendering the object in the second orientation includes adding shading, lighting, or any combination thereof to the object based on the environment.

In some embodiments, the environment is a virtual environment (e.g., as described with respect to FIG. 6A).

In some embodiments, before rendering the object in the first orientation (and/or before rendering the object in the second orientation and/or before detecting the input corresponding to the request to place the object at the first location in the environment), the system process receives a model (e.g., a two-dimensional model, a three-dimensional model, a rendering model, and/or a graphic model) of the object (e.g., 604), wherein the object is rendered in the first orientation using the model of the object. In some embodiments, the input corresponding to the request to manage the orientation of the object in the respective manner includes the model of the object. In some embodiments, the model of the object is received before receiving the input corresponding to the request to manage the orientation of the object in the respective manner. In some embodiments, the object is rendered in the second orientation using the model.

Note that details of the processes described above with respect to process 700 (e.g., FIG. 7) are also applicable in an analogous manner to the processes described herein. For example, process None00 optionally includes one or more of the characteristics of the various processes described herein with reference to process 700. For example, the displaying of method 500 can occur in response to the output of method 700. For brevity, these details are not repeated herein.

FIG. 8A illustrates an electronic system 800 with which some examples of the subject technology may be implemented. The electronic system 800 can be, and/or can be a part of, the electronic device 105, the handheld electronic device 104, the electronic device 110, the electronic device 115, and/or the server 120 as shown in FIG. 1. The electronic system 800 may include various types of computer readable media and interfaces for various other types of computer readable media. The electronic system 800 includes a bus 808, one or more processing unit(s) 812, a system memory 804 (and/or buffer), a ROM 810, a permanent storage device 802, an input device interface 814, an output device interface 806, and one or more network interfaces 816, or subsets and variations thereof.

The bus 808 collectively represents all system, peripheral, and chipset buses that communicatively connect the numerous internal devices of the electronic system 800. In some examples, the bus 808 communicatively connects the one or more processing unit(s) 812 with the ROM 810, the system memory 804, and the permanent storage device 802. From these various memory units, the one or more processing unit(s) 812 retrieves instructions to execute and data to process in order to execute the processes of the subject disclosure. The one or more processing unit(s) 812 can be a single processor or a multi-core processor in different examples.

The ROM 810 stores static data and instructions that are needed by the one or more processing unit(s) 812 and other modules of the electronic system 800. The permanent storage device 802, on the other hand, may be a read-and-write memory device. The permanent storage device 802 may be a non-volatile memory unit that stores instructions and data even when the electronic system 800 is off. In some examples, a mass-storage device (such as a magnetic or optical disk and its corresponding disk drive) may be used as the permanent storage device 802.

In some examples, a removable storage device (such as a floppy disk, flash drive, and its corresponding disk drive) may be used as the permanent storage device 802. Like the permanent storage device 802, the system memory 804 may be a read-and-write memory device. However, unlike the permanent storage device 802, the system memory 804 may be a volatile read-and-write memory, such as random access memory. The system memory 804 may store any of the instructions and data that one or more processing unit(s) 812 may need at runtime. In some examples, the processes of the subject disclosure are stored in the system memory 804, the permanent storage device 802, and/or the ROM 810 (which are each implemented as a non-transitory computer-readable medium). From these various memory units, the one or more processing unit(s) 812 retrieves instructions to execute and data to process in order to execute the processes of some examples.

The bus 808 also connects to the input and output device interfaces 814 and 806. The input device interface 814 enables a user to communicate information and select commands to the electronic system 800. Input devices that may be used with the input device interface 814 may include, for example, alphanumeric keyboards and pointing devices (also called "cursor control devices"). The output device interface 806 may enable, for example, the display of images generated by electronic system 800. Output devices that may be used with the output device interface 806 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. Some examples may include devices that function as both input and output devices, such as a touchscreen. In these examples, feedback provided to the user can be any form of sensory feedback, such as visual feedback, auditory feedback, or tactile feedback; and input from the user can be received in any form, including acoustic, speech, or tactile input.

Finally, as shown in FIG. 8A, the bus 808 also couples the electronic system 800 to one or more networks and/or to one or more network nodes, such as the electronic device 110 shown in FIG. 1, through the one or more network interface(s) 816. In this manner, the electronic system 800 can be a part of a network of computers (such as a LAN, a wide area network ("WAN"), or an Intranet, or a network of networks, such as the Internet. Any or all components of the electronic system 800 can be used in conjunction with the subject disclosure.

These functions described above can be implemented in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some examples include electronic components, such as microprocessors, storage and memory that store computer program instructions in a machine-readable or computer-readable medium (also referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra density optical discs, any other optical or magnetic media, and floppy disks. The computer-readable media can store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some examples are performed by one or more integrated circuits, such as application specific integrated circuits (ASICs) or field programmable gate arrays (FPGAs). In some examples, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, some examples of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; e.g., feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; e.g., by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an example of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and may interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

Some examples within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In some examples, the tangible computer-readable storage medium can be directly coupled to a computing device, while in other examples, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, some examples are performed by one or more integrated circuits, such as ASICs or FPGAs. In some examples, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In some examples, multitasking and parallel processing may be advantageous. Moreover, the separation of various system components in the examples described above should not be understood as requiring such separation in all examples, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In some examples, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more examples, some examples, other examples, such examples, one example, for example, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other examples. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure. Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, software modules and/or components.

Implementations within the scope of the present disclosure include a computer-readable storage medium that encodes instructions organized as an application (e.g., application 828) that, when executed by one or more processing units, control an electronic device (e.g., device 826) to perform the method of FIG. 8B, the method of FIG. 8C, and/or one or more other processes and/or methods described herein.

It should be recognized that application 828 (shown in FIG. 8D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 828 is an application that is pre-installed on device 826 at purchase (e.g., a first party application). In other embodiments, application 828 is an application that is provided to device 826 via an operating system update file (e.g., a first party application or a second party application). In some embodiments, application 828 is an application that is provided via an application store. In some embodiments, the application store can be an application store that is pre-installed on device 826 at purchase (e.g., a first party application store). In some embodiments, the application store is a third-party application store (e.g., an application store that is provided by another application store, downloaded via a network, and/or read from a storage device).

Referring to FIG. 8B and FIG 8F, application 828 obtains information (e.g., 818). In some embodiments, at 818, information is obtained from at least one hardware component of the device 826. In some embodiments, at 818, information is obtained from at least one software module (e.g., set of instructions) of the device 826. In some embodiments, at 818, information is obtained from at least one hardware component external to the device 826 (e.g., a peripheral device, an accessory device, and/or a server). In some embodiments, the information obtained at 818 includes positional information, time information, notification information, user information, environment information, electronic device state information, weather information, media information, historical information, event information, hardware information, and/or motion information. In some embodiments, in response to and/or after obtaining the information at 818, application 828 provides the information to a system (e.g., 820).

In some embodiments, the system (e.g., 838 shown in FIG. 8E) is an operating system hosted on the device 826. In some embodiments, the system (e.g., 838 shown in FIG. 8E) is an external device (e.g., a server, a peripheral device, an accessory, and/or a personal computing device) that includes an operating system.

Referring to FIG. 8C and FIG. 8G, application 828 obtains information (e.g., 822). In some embodiments, the information obtained at 822 includes positional information, time information, notification information, user information, environment information electronic device state information, weather information, media information, historical information, event information, hardware information and/or motion information. In response to and/or after obtaining the information at 822, application 828 performs an operation with the information (e.g., 824). In some embodiments, the operation performed at 824 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 838 based on the information.

In some embodiments, one or more steps of the method of FIG. 8B and/or the method of FIG. 8C is performed in response to a trigger. In some embodiments, the trigger includes detection of an event, a notification received from system 838, a user input, and/or a response to a call to an API provided by system 838.

In some embodiments, the instructions of application 828, when executed, control device 826 to perform the method of FIG. 8B and/or the method of FIG. 8C by calling an application programming interface (API) (e.g., API 834) provided by system 838. In some embodiments, application 828 performs at least a portion of the method of FIG. 8B and/or the method of FIG. 8C without calling API 834.

In some embodiments, one or more steps of the method of FIG. 8B and/or the method of FIG. 8C includes calling an API (e.g., API 834) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 8D, device 826 is illustrated. In some embodiments, device 826 is a personal computing device, a smart phone, a smart watch, a fitness tracker, a head mounted display (HMD) device, a media device, a communal device, a speaker, a television, and/or a tablet. Device 826 includes application 828 and an operating system (not shown) (e.g., system 838 shown in FIG. 8E). Application 828 includes application implementation instructions 830 and API calling instructions 832. System 838 includes API 834 and implementation instructions $00. It should be recognized that device 826, application 828, and/or system 838 can include more, fewer, and/or different components than illustrated in FIG. 8D and 8E.

In some embodiments, application implementation instructions 830 is a software module that includes a set of one or more computer-readable instructions. In some embodiments, the set of one or more instructions of instructions 830 correspond to one or more operations performed by application 828. For example, when application 828 is a messaging application, application implementation instructions 830 can include operations to receive and send messages. In some embodiments, application implementation instructions 830 communicates with API calling instructions to communicate with system 838 via API 834 (shown in FIG. 8E).

In some embodiments, API-calling instructions 832 is a software module that includes a set of one or more computer-executable instructions.

In some embodiments, implementation instructions 836 is a software module that includes a set of one or more computer-executable instructions.

In some embodiments, API 834 is a software module that includes a set of one or more computer-executable instructions. In some embodiments, API 834 provides an interface that allows a different set of instructions (e.g., API calling instructions 832) to access and/or use one or more functions, methods, procedures, data structures, classes, and/or other services provided by implementation instructions 836 of system 838. For example, API-calling instructions 832 can access a feature of implementation instructions 836 through one or more API calls or invocations (e.g., embodied by a function or a method call) exposed by API 834 and can pass data and/or control information using one or more parameters via the API calls or invocations. In some embodiments, API 834 allows application 828 to use a service provided by a Software Development Kit (SDK) library. In some embodiments, application 828 incorporates a call to a function or method provided by the SDK library and provided by API 834 or uses data types or objects defined in the SDK library and provided by API 834. In some embodiments, API-calling instructions 832 makes an API call via API 834 to access and use a feature of implementation instructions 836 that is specified by API 834. In such embodiments, implementation instructions 836 can return a value via API 834 to API-calling instructions 832 in response to the API call. The value can report to application 828 the capabilities or state of a hardware component of device 826, including those related to aspects such as input capabilities and state, output capabilities and state, processing capability, power state, storage capacity and state, and/or communications capability. In some embodiments, API 834 is implemented in part by firmware, microcode, or other low level logic that executes in part on the hardware component.

In some embodiments, API 834 allows a developer of API-calling instructions 832 (which can be a third-party developer) to leverage a feature provided by implementation instructions 836. In such embodiments, there can be one or more set of API-calling instructions (e.g., including API-calling instructions 832) that communicate with implementation instructions 836. In some embodiments, API 834 allows multiple sets of API-calling instructions written in different programming languages to communicate with implementation instructions 836 (e.g., API 834 can include features for translating calls and returns between implementation instructions 836 and API-calling instructions 832) while API 834 is implemented in terms of a specific programming language. In some embodiments, API-calling instructions 832 calls APIs from different providers such as a set of APIs from an OS provider, another set of APIs from a plug-in provider, and/or another set of APIs from another provider (e.g., the provider of a software library) or creator of the another set of APIs.

Examples of API 834 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments the sensor API is an API for accessing data associated with a sensor of device 826. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, implementation instructions 836 is a system (e.g., operating system, server system) software module (e.g., a collection of computer-readable instructions) that is constructed to perform an operation in response to receiving an API call via API 834. In some embodiments, implementation instructions 836 is constructed to provide an API response (via API 834) as a result of processing an API call. By way of example, implementation instructions 836 and API-calling instructions 832 can each be any one of an operating system, a library, a device driver, an API, an application program, or other module. It should be understood that implementation instructions 836 and API-calling instructions 832 can be the same or different type of software module from each other. In some embodiments, implementation instructions 836 is embodied at least in part in firmware, microcode, or other hardware logic.

In some embodiments, implementation instructions 836 returns a value through API 834 in response to an API call from API-calling instructions 832. While API 834 defines the syntax and result of an API call (e.g., how to invoke the API call and what the API call does), API 834 might not reveal how implementation instructions 836 accomplishes the function specified by the API call. Various API calls are transferred via the one or more application programming interfaces between API-calling instructions 832 and implementation instructions 836. Transferring the API calls can include issuing, initiating, invoking, calling, receiving, returning, and/or responding to the function calls or messages. In other words, transferring can describe actions by either of API-calling instructions 832 or implementation instructions 836. In some embodiments, a function call or other invocation of API 834 sends and/or receives one or more parameters through a parameter list or other structure.

In some embodiments, implementation instructions 836 provides more than one API, each providing a different view of or with different aspects of functionality implemented by implementation instructions 836. For example, one API of implementation instructions 836 can provide a first set of functions and can be exposed to third party developers, and another API of implementation instructions 836 can be hidden (e.g., not exposed) and provide a subset of the first set of functions and also provide another set of functions, such as testing or debugging functions which are not in the first set of functions. In some embodiments, implementation instructions 836 calls one or more other components via an underlying API and thus be both a set of API calling instructions and a set of implementation instructions. It should be recognized that implementation instructions 836 can include additional functions, methods, classes, data structures, and/or other features that are not specified through API 834 and are not available to API calling instructions 832. It should also be recognized that API calling instructions 832 can be on the same system as implementation instructions 836 or can be located remotely and access implementation instructions 836 using API 834 over a network. In some embodiments, implementation instructions 836, API 834, and/or API-calling instructions 832 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

In some embodiments, processes 400 and/or 700 (e.g., FIGS. 5 and 7) is performed at a first computer system (as described herein) via a system process (e.g., an operating system process, a server system process) that is different from one or more applications executing and/or installed on the first computer system.

In some embodiments, processes 400 and/or 700 (e.g., FIGS. 5 and 7) is performed at a first computer system (as described herein) by an application that is different from a system process. In some embodiments, the instructions of the application, when executed, control the first computer system to perform processes 400 and/or 700 (e.g., FIGS. 5 and 7) by calling an application programming interface (API) provided by the system process. In some embodiments, the application performs at least a portion of processes 400 and/or 700 (e.g., FIGS. 5 and 7) without calling the API.

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first party application). In some embodiments, the application is an application that is provided to the first computer system via an operating system update file (e.g., a first party application). In some embodiments, the application is an application that is provided via an application store. In some embodiments, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform processes 400 and/or 700 (e.g., FIGS. 5 and 7) by calling an application programming interface (API) provided by the system process using one or more parameters.

In some embodiments, at least one API is a software module (e.g., a collection of computer-readable instructions) that provides an interface that allows a different set of instructions (e.g., API calling instructions) to access and use one or more functions, methods, procedures, data structures, classes, and/or other services provided by a set of implementation instructions of the system process. The API can define one or more parameters that are passed between the API calling instructions and the implementation instructions.

As described above, in some embodiments, the application controls the first computer system to perform processes 400 and/or 700 (e.g., FIGS. 5 and 7) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, the set of implementation instructions is a system software module (e.g., a collection of computer-readable instructions) that is constructed to perform an operation in response to receiving an API call via the API. In some embodiments, the set of implementation instructions is constructed to provide an API response (via the API) as a result of processing an API call. In some embodiments, the set of implementation instructions is included in the device (e.g., 826) that runs the application. In some embodiments, the set of implementation instructions is included in an electronic device that is separate from the device that runs the application.

### Clauses:

1. A method performed by a system process, the method comprising:
   at a computer system that is executing the system process:
   receiving a first position of a subject; and
   in response to receiving the first position of the subject:
      in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and
      in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.
2. The method of clause 1, wherein the object is a first object, wherein the application is a first application, the method further comprising:
   in response to receiving the first position of the subject:
   in accordance with a determination that a third set of one or more criteria is satisfied, wherein the third set of one or more criteria includes a criterion that is satisfied when the first position has a third positional relationship to a second object different from the subject and the computer system, providing, to a second application different from the first application, a second viewing direction; and
   in accordance with a determination that a fourth set of one or more criteria, different from the third set of one or more criteria, is satisfied, wherein the fourth set of one or more criteria includes a criterion that is satisfied when the first position has a fourth positional relationship to the second object different from the third positional relationship to the second object, forgoing provision of, to the second application, the second viewing direction.
3. The method of any one of clauses 1-2, wherein the application is a first application, the method further comprising:
   in response to receiving the first position of the subject and in accordance with a determination that a fifth set of one or more criteria, different from the first set of one or more criteria and the second set of one or more criteria, is satisfied, forgoing provision of, to an application, a viewing direction.
4. The method of any one of clauses 1-3, wherein the first position includes a location, an orientation, a gaze direction of a subject, or any combination thereof.
5. The method of any one of clauses 1-4, wherein the first viewing direction is a viewing direction from a set of one or more predefined viewing directions.
6. The method of any one of clauses 1-5, further comprising:
   receiving a second position of the subject different from the first position of the subject; and
   in response to receiving the second position of the subject and in accordance with a determination that the first set of one or more criteria is satisfied, wherein the first set of one or more criteria includes a criterion that is satisfied when the first position has the first positional relationship to the object, providing, to the application, the first viewing direction.
7. The method of any one of clauses 1-6, further comprising:
   receiving a third position of the subject different from the first position of the subject; and
   in response to receiving the third position of the subject and in accordance with a determination that a seventh set of one or more criteria, different from the first set of one or more criteria and the second set of one or more criteria, is satisfied, wherein the seventh set of one or more criteria includes a criterion that is satisfied when the third position has a seventh positional relationship, different from the first positional relationship and the second positional relationship, to the object, providing, to the application, a third viewing direction different from the first viewing direction.
8. The method of any one of clauses 1-7, wherein the object is a volume.
9. The method of any one of clauses 1-8, wherein the object is a virtual object rendered by the application.
10. The method of any one of clauses 1-9, wherein the object is a virtual control.
11. The method of any one of clauses 1-10, wherein the first set of one or more criteria includes a criterion that is satisfied when the application requested to be notified in response to a viewing direction being the first viewing direction.
12. The method of any one of clauses 1-11, wherein the first set of one or more criteria includes a criterion that is satisfied when a first user interface of the application is in a field-of-view of the subject.
13. The method of any one of clauses 1-12, wherein the first set of one or more criteria includes a criterion that is satisfied when a second user interface of the application is being focused on by the subject.
14. The method of any one of clauses 1-13, wherein the system process does not receive an input from the application after receiving a request to manage the object and before providing the first viewing direction to the application.
15. The method of any one of clauses 1-14, wherein another system process, different from the system process, renders the object.
16. The method of any one of clauses 1-15, further comprising:
   rendering the object.
17. A non-transitory computer-readable medium storing one or more programs configured to be executed by one or more processors of a computer system that is executing the system process, the one or more programs including instructions for performing the method of any one of clauses 1-16.
18. A computer system that is executing the system process, comprising:
   one or more processors; and
   memory storing one or more programs configured to be executed by the one or more processors, the one or more programs including instructions for performing the method of any one of clauses 1-16.
19. A computer system that is executing the system process, comprising:
   means for performing the method of any one of clauses 1-16.
20. A computer program product, comprising one or more programs configured to be executed by one or more processors of a computer system that is executing the system process, the one or more programs including instructions for performing the method of any one of clauses 1-16.
21. A non-transitory computer-readable storage medium storing one or more programs configured to be executed by one or more processors of a computer system that is executing a system process, the one or more programs including instructions for:
   receiving a first position of a subject; and
   in response to receiving the first position of the subject:
      in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and
      in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.
22. A computer system that is executing a system process, comprising:
   one or more processors; and
   memory storing one or more programs configured to be executed by the one or more processors, the one or more programs including instructions for:
      receiving a first position of a subject; and
      in response to receiving the first position of the subject:
         in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and
         in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.
23. A computer system that is executing a system process, comprising:
   means for receiving a first position of a subject; and
   in response to receiving the first position of the subject:
      means for, in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and
      means for, in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.
24. A computer program product, comprising one or more programs configured to be executed by one or more processors of a computer system that is executing a system process, the one or more programs including instructions for:
   receiving a first position of a subject; and
   in response to receiving the first position of the subject:
      in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and
      in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.
25. A method performed by a system process, the method comprising:
   at a computer system that is in communication with one or more input devices, wherein the computer system is executing the system process:
   receiving, from an application, an input corresponding to a request to manage an orientation of an object in a respective manner;
   after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and
   in response to detecting the input corresponding to the request to place the object at the first location in the environment:
      in accordance with a determination that the respective manner is a first manner, rendering the object in a first orientation; and
      in accordance with a determination that the respective manner is a second manner different from the first manner, rendering the object in a second orientation different from the first orientation.
26. The method of clause 25, wherein the application is a first application, wherein the object is a first object, the method further comprising:
   receiving, from a second application different from the first application, an input corresponding to a request to manage an orientation of a second object, different from the first object, in a respective manner.
27. The method of any one of clauses 25-26, wherein the object is a first object, wherein the respective manner is a first respective manner, wherein the environment is a first environment, the method further comprising:
   receiving, from the application, an input corresponding to a request to manage an orientation of a second object, different from the first object, in a second respective manner different from the first respective manner;
   after receiving the input corresponding to the request to manage the orientation of the second object in the second respective manner and without receiving an input from the application since receiving the input corresponding to the request to manage the orientation of the second object in the second respective manner, detecting, via the one or more input devices, an input corresponding to a request to place the second object at a second location in a second environment; and
   in response to detecting the input corresponding to the request to place the second object at the second location in the second environment:
      in accordance with a determination that the second respective manner is the first manner, rendering the second object in a third orientation; and
      in accordance with a determination that the second respective manner is a second manner different from the first manner, rendering the second object in a fourth orientation different from the third orientation.
28. The method of any one of clauses 25-27, wherein the input corresponding to the request to place the object at the first location in the environment includes a gaze input.
29. The method of any one of clauses 25-28, wherein the input corresponding to the request to place the object at the first location in the environment includes a movement input.
30. The method of any one of clauses 25-29, wherein the input corresponding to the request to place the object at the first location in the environment includes a selection input.
31. The method of any one of clauses 25-30, further comprising:
   after rendering the object in the first manner, detecting, via the one or more input devices, an input corresponding to a request to place the object at a second location in the environment different from the first location in the environment; and
   in response to detecting the input corresponding to the request to place the object at the second location in the environment:
      in accordance with a determination that the respective manner is the first manner, rendering the object in the first orientation; and
      in accordance with a determination that the respective manner is the second manner, rendering the object in a third orientation different from the first orientation and the second orientation.
32. The method of any one of clauses 25-31, wherein the first manner is relative to a viewing direction of a subject.
33. The method of any one of clauses 25-32, wherein the second manner is relative to a coordinate space of the environment.
34. The method of any one of clauses 25-33, wherein rendering the object in the first orientation includes adding shading, lighting, or any combination thereof to the object based on the environment.
35. The method of any one of clauses 25-34, wherein the environment is a virtual environment.
36. The method of any one of clauses 25-35, further comprising:
   before rendering the object in the first orientation, receiving a model of the object, wherein the object is rendered in the first orientation using the model of the object.
37. A non-transitory computer-readable medium storing one or more programs configured to be executed by one or more processors of a computer system that is in communication with one or more input devices, wherein the computer system is executing the system process, the one or more programs including instructions for performing the method of any one of clauses 25-36.
38. A computer system that is configured to communicate with one or more input devices, wherein the computer system is executing the system process, the computer system comprising:
   one or more processors; and
   memory storing one or more programs configured to be executed by the one or more processors, the one or more programs including instructions for performing the method of any one of clauses 25-36.
39. A computer system that is configured to communicate with one or more input devices, wherein the computer system is executing the system process, the computer system comprising:
   means for performing the method of any one of clauses 25-36.
40. A computer program product, comprising one or more programs configured to be executed by one or more processors of a computer system that is in communication with one or more input devices, wherein the computer system is executing the system process, the one or more programs including instructions for performing the method of any one of clauses 25-36.
41. A non-transitory computer-readable storage medium storing one or more programs configured to be executed by one or more processors of a computer system that is in communication with one or more input devices, wherein the computer system is executing a system process, the one or more programs including instructions for:
   receiving, from an application, an input corresponding to a request to manage an orientation of an object in a respective manner;
   after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and
   in response to detecting the input corresponding to the request to place the object at the first location in the environment:
      in accordance with a determination that the respective manner is a first manner, rendering the object in a first orientation; and
      in accordance with a determination that the respective manner is a second manner different from the first manner, rendering the object in a second orientation different from the first orientation.
42. A computer system configured to communicate with one or more input devices, wherein the computer system is executing a system process, comprising:
   one or more processors; and
   memory storing one or more programs configured to be executed by the one or more processors, the one or more programs including instructions for:
      receiving, from an application, an input corresponding to a request to manage an orientation of an object in a respective manner;
      after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and
      in response to detecting the input corresponding to the request to place the object at the first location in the environment:
         in accordance with a determination that the respective manner is a first manner, rendering the object in a first orientation; and
         in accordance with a determination that the respective manner is a second manner different from the first manner, rendering the object in a second orientation different from the first orientation.
43. A computer system configured to communicate with one or more input devices, wherein the computer system is executing a system process, comprising:
   means for receiving, from an application, an input corresponding to a request to manage an orientation of an object in a respective manner;
   means for, after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and
   in response to detecting the input corresponding to the request to place the object at the first location in the environment:
      means for, in accordance with a determination that the respective manner is a first manner, rendering the object in a first orientation; and
      means for, in accordance with a determination that the respective manner is a second manner different from the first manner, rendering the object in a second orientation different from the first orientation.
44. A computer program product, comprising one or more programs configured to be executed by one or more processors of a computer system that is in communication with one or more input devices, wherein the computer system is executing a system process, the one or more programs including instructions for:
   receiving, from an application, an input corresponding to a request to manage an orientation of an object in a respective manner;
   after receiving the input corresponding to the request to manage the orientation of the object in the respective manner and without receiving an input from the application since receiving the input corresponding to the request to manage the orientation of the object in the respective manner, detecting, via the one or more input devices, an input corresponding to a request to place the object at a first location in an environment; and
   in response to detecting the input corresponding to the request to place the object at the first location in the environment:
      in accordance with a determination that the respective manner is a first manner, rendering the object in a first orientation; and
      in accordance with a determination that the respective manner is a second manner different from the first manner, rendering the object in a second orientation different from the first orientation.

## Claims

1. A method performed by a system process, the method comprising:
at a computer system that is executing the system process:
receiving a first position of a subject; and
in response to receiving the first position of the subject:
in accordance with a determination that a first set of one or more criteria is satisfied, wherein the first set of one or more criteria includes a criterion that is satisfied when the first position has a first positional relationship to an object different from the subject and the computer system, providing, to an application, a first viewing direction; and
in accordance with a determination that a second set of one or more criteria, different from the first set of one or more criteria, is satisfied, wherein the second set of one or more criteria includes a criterion that is satisfied when the first position has a second positional relationship to the object different from the first positional relationship to the object, forgoing provision of, to the application, the first viewing direction.

2. The method of claim 1, wherein the object is a first object, wherein the application is a first application, the method further comprising:
in response to receiving the first position of the subject:
in accordance with a determination that a third set of one or more criteria is satisfied, wherein the third set of one or more criteria includes a criterion that is satisfied when the first position has a third positional relationship to a second object different from the subject and the computer system, providing, to a second application different from the first application, a second viewing direction; and
in accordance with a determination that a fourth set of one or more criteria, different from the third set of one or more criteria, is satisfied, wherein the fourth set of one or more criteria includes a criterion that is satisfied when the first position has a fourth positional relationship to the second object different from the third positional relationship to the second object, forgoing provision of, to the second application, the second viewing direction.

3. The method of any one of claims 1-2, wherein the application is a first application, the method further comprising:
in response to receiving the first position of the subject and in accordance with a determination that a fifth set of one or more criteria, different from the first set of one or more criteria and the second set of one or more criteria, is satisfied, forgoing provision of, to an application, a viewing direction.

4. The method of any one of claims 1-3, wherein the first position includes a location, an orientation, a gaze direction of a subject, or any combination thereof.

5. The method of any one of claims 1-4, wherein the first viewing direction is a viewing direction from a set of one or more predefined viewing directions.

6. The method of any one of claims 1-5, further comprising:
receiving a second position of the subject different from the first position of the subject; and
in response to receiving the second position of the subject and in accordance with a determination that the first set of one or more criteria is satisfied, wherein the first set of one or more criteria includes a criterion that is satisfied when the first position has the first positional relationship to the object, providing, to the application, the first viewing direction.

7. The method of any one of claims 1-6, further comprising:
receiving a third position of the subject different from the first position of the subject; and
in response to receiving the third position of the subject and in accordance with a determination that a seventh set of one or more criteria, different from the first set of one or more criteria and the second set of one or more criteria, is satisfied, wherein the seventh set of one or more criteria includes a criterion that is satisfied when the third position has a seventh positional relationship, different from the first positional relationship and the second positional relationship, to the object, providing, to the application, a third viewing direction different from the first viewing direction.

8. The method of any one of claims 1-7, wherein the object is a volume.

9. The method of any one of claims 1-8, wherein the first set of one or more criteria includes a criterion that is satisfied when the application requested to be notified in response to a viewing direction being the first viewing direction.

10. The method of any one of claims 1-9, wherein the first set of one or more criteria includes a criterion that is satisfied when a first user interface of the application is in a field-of-view of the subject.

11. The method of any one of claims 1-10, wherein the first set of one or more criteria includes a criterion that is satisfied when a second user interface of the application is being focused on by the subject.

12. The method of any one of claims 1-11, wherein the system process does not receive an input from the application after receiving a request to manage the object and before providing the first viewing direction to the application.

13. The method of any one of claims 1-12, further comprising:
rendering the object.

14. A non-transitory computer-readable medium storing one or more programs configured to be executed by one or more processors of a computer system that is executing the system process, the one or more programs including instructions for performing the method of any one of claims 1-13.

15. A computer system that is executing the system process, comprising:
one or more processors; and
memory storing one or more programs configured to be executed by the one or more processors, the one or more programs including instructions for performing the method of any one of claims 1-13.
